(19) Europäisches Patentamt
European Patent Office
Office européen des brevets

(11) **EP 2 438 727 B1**

(12) **EUROPEAN PATENT SPECIFICATION**

(45) Date of publication and mention
of the grant of the patent:
**23.10.2013 Bulletin 2013/43**

(51) Int Cl.:
***H04L 27/00*** *(2006.01)*

(21) Application number: **10728118.0**

(22) Date of filing: **02.06.2010**

(86) International application number:
**PCT/EP2010/003335**

(87) International publication number:
**WO 2010/139458 (09.12.2010 Gazette 2010/49)**

(54) **Process for computing a frequency offset for a UMTS communication system based on the CPICH pilot signals**

Verfahren zur Berechnung eines Frequenzversatzes für ein UMTS-Kommunikationssystem basierend auf CPICH-Pilotsignalen

Processus pour calculer un décalage de fréquence pour un système de communication UMTS basé sur des signaux pilote CPICH

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **02.06.2009 EP 09368017**

(43) Date of publication of application:
**11.04.2012 Bulletin 2012/15**

(73) Proprietor: **ST-Ericsson SA**
**1228 Plan-les-Ouates (CH)**

(72) Inventors:
• **TOUFIK, Issam**
**F-06160 Juan Les Pins (FR)**
• **ANCORA, Andrea**
**F-06300 Nice (FR)**

(74) Representative: **Schuffenecker, Thierry**
**Cabinet Thierry Schuffenecker**
**120, Chemin de la Maure**
**06800 Cagnes sur Mer (FR)**

(56) References cited:
**EP-A- 1 249 980      JP-A- 2004 072 458**
**US-A1- 2005 286 611**

• LUISE M ET AL: "Carrier frequency recovery in all-digital modems for burst-mode transmissions" IEEE TRANSACTIONS ON COMMUNICATIONS, IEEE SERVICE CENTER, PISCATAWAY, NJ, US, vol. 43, no. 2-4, 1 February 1995 (1995-02-01), pages 1169-1178, XP002321165 ISSN: 0090-6778
• DAE-KI HONG ET AL: "Robust frequency offset estimation for pilot symbol assisted packet CDMA with MIMO antenna systems", IEEE COMMUNICATIONS LETTERS, IEEE SERVICE CENTER, PISCATAWAY, NJ, US, vol. 6, no. 6, 1 June 2002 (2002-06-01), pages 262-264, XP011429928, ISSN: 1089-7798, DOI: 10.1109/LCOMM.2002.1010875
• KYUNGCHUN LEE ET AL: "Carrier frequency recovery in MIMO and OFDM systems using orthogonal training sequences", 2004 IEEE 60TH VEHICULAR TECHNOLOGY CONFERENCE. VTC2004-FALL (IEEE CAT. NO.04CH37575) IEEE PISCATAWAY, NJ, USA, IEEE, vol. 2, 26 September 2004 (2004-09-26), pages 1518-1522, XP010786878, DOI: 10.1109/VETECF. 2004.1400277 ISBN: 978-0-7803-8521-4

- **SEOK HO WON ET AL: "Channel estimation methods adequate to space time transmit diversity receiver in the W-CDMA IMT-2000 system", IEEE 54TH VEHICULAR TECHNOLOGY CONFERENCE. VTC FALL 2001. PROCEEDINGS 7-11 OCT. 2001 ATLANTIC CITY, NJ, USA; [IEEE VEHICULAR TECHNOLGY CONFERENCE], IEEE 54TH VEHICULAR TECHNOLOGY CONFERENCE. VTC FALL 2001. PROCEEDINGS (CAT. NO.01CH37211) IEEE PISCATA, vol. 1, 7 October 2001 (2001-10-07), pages 456-459, XP010562727, ISBN: 978-0-7803-7005-0**

**Description**

**Technical field**

The invention relates to the field of wireless communication and more particularly to a process for estimating the frequency offset in third generation wireless communication systems, particularly for UMTS.

**Background Art**

Universal Mobile Telecommunications Systems (UMTS) is based on the W-CDMA technology and is in the heart of the 3G communication networks providing packet based transmission of text, digitized voice, and multimedia data at rates up to 2 Megabits per second.

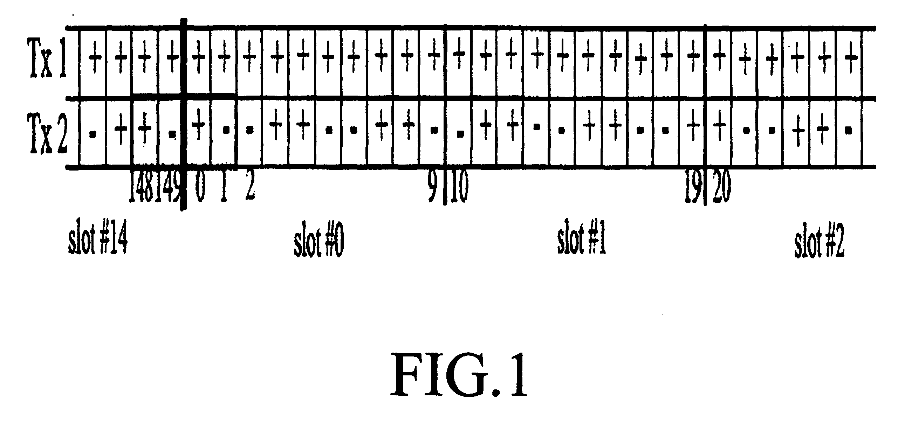

One particular case of UMTS is defined in the 3G specification, where one base station of such a communication systems may comprise two emitting antennas each transmitting one signal comprising one corresponding Common PIlot CHannel (CPICH). The transmitted sequence of pilots from each antenna is constructed by applying a sign pattern given by figure 1 to the symbol$(1 + j)$, where $j$ is to the imaginary complex such as $j^2 = -1$.

Figure **1**: This figure represents the pattern of the transmitted CPICH pilots' sequence.

Those two pilot signals which are transmitted by the base station are used for the determination of the channel characteristics but also for estimating the frequency offset between the base station reference clock and the internal clock of  the User Equipment (UE). The received signal corresponding to the transmission of the $k^{th}$ pilot sample in the absence of frequency offset is given by:

$$r[k] = (1 + j)\left( h_1[k] + (-1)^{\left\lfloor \frac{k+1}{2} \right\rfloor} h_2[k] \right) + n[k]$$

while when the UE is subject to a frequency offset with respect to the base station, the received signal is then

$$r[k] = (1 + j)\left( h_1[k] + (-1)^{\left\lfloor \frac{k+1}{2} \right\rfloor} h_2[k] \right)\exp\left(j2\pi k\Delta fT + \varphi_0\right) + n[k]$$

Where $h_m[k]$ corresponds to the channel response from antenna m (m=1, 2) and at the time instant of transmission of the $k^{th}$ pilot, $\Delta f$ is the frequency offset, $T$ is the time duration between two consecutive samples and $\varphi_0$ is an initial phase rotation.

Some techniques are already known for computing an estimation of the frequency offset based on the computation of phase discriminator.

However, the techniques which are known do not achieve both accuracy in the estimation of the offset and still operate in a relatively wide range of frequency offsets.

It is particularly desirable to be able to estimate an offset in the maximum range allowed by an estimation based on the CPICH, while providing accuracy in the estimation. This maximum range is given by $\left| \Delta f \right| \leq \frac{1}{2T}$, where $T$ is the time between two consecutive CPICH pilots. In UMTS $T = \frac{1}{15}10^{-3}$ seconds, which corresponds to covering a range of frequency offsets from minus to plus 7500 Hz.

Such is the goal of the present invention.

EP 1 249 980 discloses an OFDM signal communication system used in broadband mobile communication which achieves stable operation under severe frequency selective fading environments. The OFDM signal communication system which transmits OFDM signals over the same radio frequency from N transmitting antennas has an inverse matrix computer for computing an N x N inverse matrix  constituted by propagation coefficients for respective propagation paths between each of N transmitting antennas and each of N receiving antennas, and a subcarrier demodulator (14) which separates the signals of the respective propagation paths, based on the obtained inverse matrix.

Document

DAE- KI HONG ET AL: "Robust frequency offset estimation for pilot symbol assisted packet CDMA with MIMO antenna systems", IEEE COMMUNICATIONS LETTERS, IEEE SERVICE CENTER, PISCATAWAY, NJ, US, vol. 6, no. 6, 1 June 2002 (2002- 06- 01), pages 262- 264, SSN: 1089- 7798, DOI: 10.1109/LCOMM. 2002.1010875
and document
KYUNGCHUN LEE ET AL: "Carrier frequency recovery in MIMO and OFDM systems using orthogonal training sequences", 2004 IEEE 60TH VEHICULAR TECHNOLOGY CONFERENCE. VTC2004- FALL (IEEE CAT. NO. 04CH37575) IEEE PISCATAWAY, NJ, USA, IEEE, vol. 2, 26 September 2004 (2004- 09- 26), pages 1518- 1522, DOI: 10.1109/VETECF. 2004.1400277 ISBN: 978- 0- 7803- 8521- 4
disclose a separation of the orthogonal pilots received from two transmit antennas and then an estimation of a carrier frequency offset.

Document

SEOK HO WON ET AL: "Channel estimation methods adequate to space time transmit diversity receiver in the W- CDMA IMT- 2000 system", IEEE 54TH VEHICULAR TECHNOLOGY CONFERENCE. VTC FALL 2001. PROCEEDINGS 7- 11 OCT. 2001 ATLANTIC CITY, NJ, USA; [IEEE VEHICULAR TECHNOLGY CONFERENCE], IEEE 54TH VEHICULAR TECHNOLOGY CONFERENCE. VTC FALL 2001. PROCEEDINGS (CAT. NO. 01CH37211) IEEE PISCATA, vol. 1, 7 October 2001 (2001- 10- 07), pages 456- 459, ISBN: 978- 0- 7803- 7005- 0
discloses a way of separating two orthogonal CPICH signals.

**Summary of the invention**

It is an object of the present invention to provide an efficient frequency offset estimation method which is suitable for direct-sequence (DS) spread-spectrum systems and particularly for the 3GPP UMTS standard.
It is a further object of the present invention to provide a method which provides both accuracy and wide range of estimation of the frequency offset.
It is another object of the present invention to provide a receiver for a UMST communication system which incorporates improved frequency offset estimation mechanisms.
These and other objects of the invention are achieved by means of a process for computing an estimation of the frequency offset which involves a pre-processing based on the separation at the receiver of the two pilot signals transmitted from the two antennas by means of the computation of

$$r_{NoTxd}[k] = r[k] + r[k+2] = (1+j)\left(S_1[k] + (-1)^{\left\lfloor\frac{k+1}{2}\right\rfloor} D_2[k]\right) + N_s[k]$$

$$r_{Txd}[k] = (-1)^{\left\lfloor\frac{k+1}{2}\right\rfloor}(r[k] - r[k+2]) = (1+j)\left(S_2[k] + (-1)^{\left\lfloor\frac{k+1}{2}\right\rfloor} D_1[k]\right) + (-1)^{\left\lfloor\frac{k+1}{2}\right\rfloor} N_d[k]$$

Where
r[k] is the received signal at the instant k;
Where $r_{NoTxd}$ and $r_{Txd}$ are the received pilot signals from antenna 1 and from antenna 2 respectively, assuming that the channel does not change (i.e. $h_1[k]=h_1$ and $h_2[k] = h_2$) and where for $m = 1,2$ :

$$\dot{S}_m[k] = h_m \exp(j\varphi_0)(\exp(jk\Phi) + \exp(j(k+2)\Phi)),$$

$$D_m[2k] = h_m \exp(j\varphi_0)(\exp(jk\Phi) - \exp(j(k+2)\Phi))$$

$$N_s[k] = n[k] + n[k+2]$$

$$N_d[k] = n[k] - n[k+2]$$

and $\Phi = 2\pi \Delta f T$
we then compute

$$R_{r_{NoTxd}r_{NoTxd}}[k] = r_{NoTxd}[k] * conj(r_{NoTxd}[k+1])$$

$$R_{r_{Txd}r_{Txd}}[k] = r_{Txd}[k] * conj(r_{Txd}[k+1])$$

where *conj*(.) is the complex conjugate operator.

With the assumption that the channel does not change (i.e. $h_1[k] = h_1$ and $h_2[k] = h_2$) and after simplification, we have

$$R_{r_{NoTxd}r_{NoTxd}}[k] = 2\left(R_{S_1S_1} + (-1)^{\left\lfloor\frac{k+1}{2}\right\rfloor}(-1)^{\left\lfloor\frac{k+2}{2}\right\rfloor}R_{D_2D_2} + (-1)^{\left\lfloor\frac{k+2}{2}\right\rfloor}R_{S_1D_2} + (-1)^{\left\lfloor\frac{k+1}{2}\right\rfloor}R_{D_2S_1}\right) + R_{N_sN_s}[k]$$

$$R_{r_{Txd}r_{Txd}}[k] = 2\left(R_{S_2S_2} + (-1)^{\left\lfloor\frac{k+1}{2}\right\rfloor}(-1)^{\left\lfloor\frac{k+2}{2}\right\rfloor}R_{D_1D_1} + (-1)^{\left\lfloor\frac{k+2}{2}\right\rfloor}R_{S_2D_1} + (-1)^{\left\lfloor\frac{k+1}{2}\right\rfloor}R_{D_1S_2}\right) + (-1)^{\left\lfloor\frac{k+1}{2}\right\rfloor}(-1)^{\left\lfloor\frac{k+2}{2}\right\rfloor}R_{N_dN_d}[k]$$

where, for $m = 1,2$ and $n = 1,2$

$$R_{S_mS_m} = S_m[k].conj(S_m[k+1]) = 2|h_m|^2 (\exp(j\Phi)(1 + \cos(2\Phi)))$$

$$R_{D_mD_m} = D_m[k].conj(D_m[k+1]) = 2|h_m|^2 (\exp(j\Phi)(1 - \cos(2\Phi)))$$

$$R_{S_mD_n} = S_m[k].conj(D_n[k+1]) = -2jh_mh_n^* \exp(j\Phi)\sin(2\Phi)$$

$$R_{N_sN_s} = N_s[k].conj(N_s[k+1])$$

$$R_{N_dN_d} = N_d[k].conj(N_d[k+1])$$

In one embodiment, the estimation is based on one estimator $R_{even,avr}$ computed in accordance with the following formulas:

$$R_{even,avr} = \frac{1}{N_2 - N_1} \sum_{k=N_1,\,k\,even}^{N_2} \left( R_{r_{Txd}r_{Txd}}[k] + R_{r_{NoTxd}r_{NoTxd}}[k] \right)$$

which simplifies to :

$$R_{even,\,avr} = 4\exp(j\Phi)\left(|h_1|^2 + |h_2|^2\right)\cos(2\Phi) + \frac{1}{N_2 - N_1} \sum_{k=N_1,\,k\,even}^{N_2} \left( R_{N_sN_s}[k] - R_{N_dN_d}[k] \right)$$

where $N_1$ and $N_2$ are respectively the indices of the first and the last CPICH symbols used for the frequency offset estimation. The use of the average tends to attenuate the effect of noise by averaging over several symbols.
The frequency offset estimate being provided by the formula:

$$\Delta f = \frac{1}{2\pi T} \arctan\left( \frac{\Im m(R_{even,\,avr})}{\Re e(R_{even,\,avr})} \right)$$

where $\Re e(.)$ and $\Im m(.)$ are respectively the imaginary part and real part operators.
Alternatively, the frequency offset estimation is based on one estimator $R_{odd,avr}$ computed in accordance with the following formulas:

$$R_{odd,\,avr} = \frac{1}{N_2 - N_1} \sum_{k=N_1,\,k\,odd}^{N_2} \left( R_{r_{Txd}r_{Txd}}[k] + R_{r_{NoTxd}r_{NoTxd}}[k] \right)$$

which simplifies to

$$R_{odd,\,avr} = 4\exp(j\Phi)\left(|h_1|^2 + |h_2|^2\right) + \frac{1}{N_2 - N_1} \sum_{k=N_1,\,k\,odd}^{N_2} \left( R_{N_sN_s}[k] + R_{N_dN_d}[k] \right)$$

where $N_1$ and $N_2$ are respectively the indices of the first and the last pilot symbols used for the frequency offset estimation.

The use of the average tends to attenuate the effect of noise by averaging over several symbols.
The frequency offset estimate being provided by the formula:

$$\Delta f = \frac{1}{2\pi T} \arctan\left(\frac{\Im m\left(R_{odd,\,avr}\right)}{\Re e\left(R_{odd,\,avr}\right)}\right)$$

In one particular, embodiment, the estimation is computed on the basis of both $R_{odd,\,avr}$ and $R_{even,\,avr}$ in accordance with the formula:

$$\text{If } \left|\Re e\left(R_{odd,\,avr}\right)\right| > \left|\Im m\left(R_{odd,\,avr}\right)\right|$$

$$R = R_{odd,\,avr} + R_{even,\,avr}$$

else

$$R = R_{odd,\,avr} - R_{even,\,avr}$$

and the frequency offset estimate being provided by the formula:

$$\Delta f = \frac{1}{2\pi T} \arctan\left(\frac{\Im m(R)}{\Re e(R)}\right)$$

The invention also provides a process for processing the CPICH pilot signals r(i) received from the two antennas of a base station which involves the steps:

- extracting the received CPICH signal included in the CPICH channel;
- performing a first processing branch (left) comprising the steps of:

  - computing a first intermediate value x(i) in accordance with the formula:

$$x(i) = r(i) + r(i+2)$$

  - computing a second intermediate value y(i) derived from the first intermediate value x(i) in accordance with the formula:

$$y(i) = x(i) \cdot x^*(i+1)$$

where x* (i+1) is the complex conjugate of x(i+1)

- performing a second processing branch (right) comprising the steps of:

  - computing a third intermediate value x'(i) in accordance with the formula:

$$x'(i) = r (i) - r(i+2)$$

  - computing a fourth intermediate value t(i) derived from the third intermediate value x'(i) in accordance with the formula:

$$t'(2k) = x'(2k)$$

  and

$$t'(2k+1) = - x'(2k+1)$$

  - computing a fifth intermediate value y'(i) derived from the fourth intermediate value t'(i) in accordance with the formula:

$$y'(i) = t'(i) \cdot t'^* (i+1)$$

- computing a sixth and seventh intermediate values Z and Z' in accordance with the formulas:

$$Z(2k) = y (2k) + y'( 2k)$$

$$Z'(2k+1) = y (2k+1) + y'( 2k+1)$$

- respectively computing an eight and a ninth values S and S' in accordance with the following formulation:

$$S = 1/N \sum Z(k) \quad \text{for } k = 1 \text{ to } N$$

$$S' = 1/N \sum Z'(k) \quad \text{for } k = 1 \text{ to } N$$

- performing a test to determine whether the absolute value of the real part of S' is superior to the absolute value of the imaginary part of S' and, in that case, computing (30) a tenth intermediate value R as follows:

$$R = S' + S$$

And, conversely if the absolute value of the real part of S' is inferior to the absolute value of the imaginary part of S', computing R in accordance with the formula:

$$R = S' - S$$

The offset estimation is then simply computed as follows:

$$\Delta f = \frac{1}{2\pi T} \arctan\left(\frac{\Im m(R)}{\Re e(R)}\right)$$

where $|\Delta f| \leq \frac{1}{2T}$, $e(R)$ and $T = \frac{1}{15}10^{-3}$ $m(R)$ are the real and imaginary parts, respectively of the tenth intermediate value R.

The invention is particularly suitable for the achievement of a UMTS receiver of a User Equipment (UE) such as a mobile telephone or a Portable Document Assistant.

Description of the drawings

Other features of one or more embodiments of the invention will best be understood by reference to the following detailed description when read in conjunction with the accompanying drawings.

Figure 1 illustrates the structure of the sign patter (applied to (1+j)) of the two CPICH pilots sequences which are used in the UMTS using transmit diversity (TxD)

Figure 2 illustrates one embodiment of the method for computing the offset frequency in accordance with the present invention.

Figure 3 illustrates the principle of the separation of the two signals transmitted through the two emitting antennas.

Figure 4 illustrates the Root Mean Square Error (RMSE) of the frequency offset estimation (FOE) as a function of the frequency offset (FO) for an AWGN environment and SNR=0dB

Figure 5 illustrates the RMSE of the frequency offset estimation as a function of Ior/Ioc, in an AWGN environment and for FO=0Hz

Figure 6 illustrates the RMSE of the frequency offset as a function of Ior/Ioc, in case1 environment (defined in the 3GPP specs) and for FO=0Hz.

**Description of the preferred embodiment**

The invention can be implemented in digital electronic circuitry forming a mobile telephone or a Portable Digital Assistant (PDA) including hardware circuits with a combination of firmware and software.

The method which is proposed is based on the computation of the phase discriminator, that is to say the sum of the autocorrelation of the samples sequence.

To simplify the mathematical treatment, we use a symbol- rate model for the CPICH symbols transmitted from Tx antenna 1 and Tx antenna 2 in symbol time instants k =0, 1,  ..., 149 ,, , , during one 10- ms radio frame, which reads:

$$p_1[k] = (1 + j)$$

$$p_2[k] = (1+j)(-1)^{\left\lfloor \frac{k+1}{2} \right\rfloor}$$

Figure 1 illustrates the sign pattern (applied to (1+j)) resulting from those formulas.

These Tx symbols are transmitted via time- varying channel coefficients to obtain the effective received symbol (on one single Rx antenna) in time instants , described by k = 0, 1, .... , 149.

$$r[k] = (h_1[k]p_1[k] + h_2[k]p_2[k])\exp((j2\pi k\Delta fT + \varphi_0)) + n[k]$$

$$r[k] = (1+j)\left( h_1[k] + (-1)^{\left\lfloor \frac{k+1}{2} \right\rfloor} h_2[k] \right)\exp((j2\pi k\Delta fT + \varphi_0)) + n[k]$$

where $h_m[k]$ is the channel gain from antenna m at time instant $k$ and $n[k]$ is the additive Gaussian noise with zero mean and variance $\sigma^2$.

$\Delta f$ corresponds to the frequency offset and assumed to be identical for both antennas.

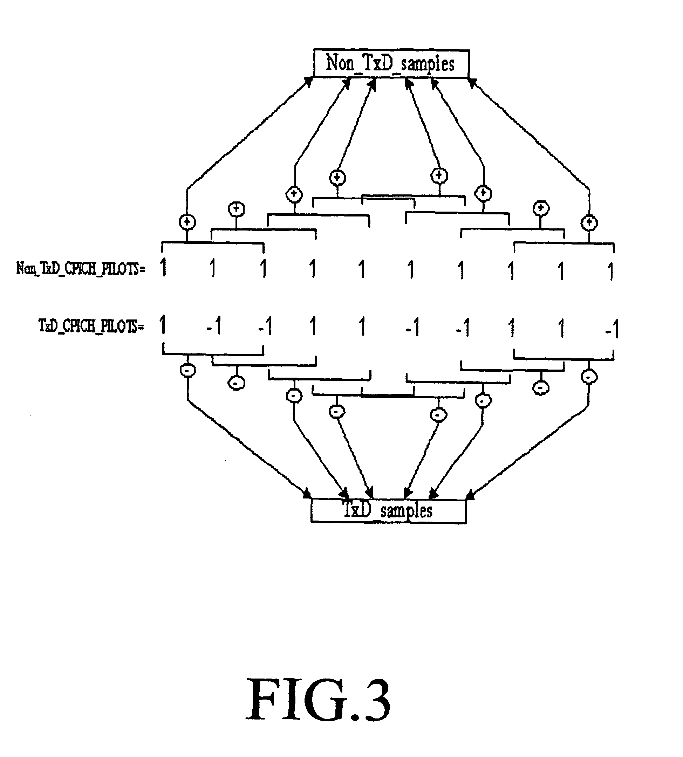

The method is based on a separation of the received pilot signals from the two transmit antennas - summarized in figure 3 - in order to keep the sampling period of the resulting samples equal to $T$, which is a condition for keeping a relatively wide estimation of frequency offsets.

Now considering $r_{NoTxd}$ and $r_{Txd}[k]$ being the computed signals respectively containing only the pilot transmitted from antenna 1 and antenna 2, computed write the following formula:

$$r_{NoTxd}[k] = r[k] + r[k+2] = (1+j)\left( S_1[k] + (-1)^{\left\lfloor \frac{k+1}{2} \right\rfloor} D_2[k] \right) + N_s[k]$$

$$r_{Txd}[k] = (-1)^{\left\lfloor \frac{k+1}{2} \right\rfloor}(r[k] - r[k+2]) = (1+j)\left( S_2[k] + (-1)^{\left\lfloor \frac{k+1}{2} \right\rfloor} D_1[k] \right) + (-1)^{\left\lfloor \frac{k+1}{2} \right\rfloor} N_d[k]$$

Where for $m = 1,2$

$$S_m[k] = h_m \exp(j\varphi_0)(\exp(jk\Phi) + \exp(j(k+2)\Phi))$$

$$D_m[2k] = h_m \exp(j\varphi_0)(\exp(jk\Phi) - \exp(j(k+2)\Phi))$$

$$N_s[k] = n[k] + n[k+2]$$

$$N_d[k] = n[k] - n[k+2]$$

$h_m$ corresponding to the channel response for antenna m ($m=1, 2$),
j corresponding to the imaginary complex such as $j^2 = -1$ and $\Phi = 2 \pi \Delta f T$

It can be seen that the sampling period of $r_{NoTxd}$ and $r_{Txd}[k]$ sequences is T, which will allow a possible estimation range of

$$|\Delta f| \leq \frac{1}{2T}$$

We then compute $R_{NoTxd}[k]$ and $R_{Txd}[k]$ from the separated signal $r_{NoTxd}$ and $r_{Txd}[k]$ as

$$R_{r_{NoTxd}r_{NoTxd}}[k] = r_{NoTxd}[k] * conj(r_{NoTxd}[k+1])$$

$$R_{r_{Txd}r_{Txd}}[k] = r_{Txd}[k] * conj(r_{Txd}[k+1])$$

which simplifies, with the assumption that the channel is constant (i.e. $h_1[k] = h_1$ and $h_2[k] = h_2$), to

$$R_{r_{NoTxd}r_{NoTxd}}[k] = 2\left( R_{S_1S_1} + (-1)^{\left\lfloor \frac{k+1}{2} \right\rfloor}(-1)^{\left\lfloor \frac{k+2}{2} \right\rfloor} R_{D_2D_2} + (-1)^{\left\lfloor \frac{k+2}{2} \right\rfloor} R_{S_1D_2} + (-1)^{\left\lfloor \frac{k+1}{2} \right\rfloor} R_{D_2S_1} \right) + R_{N_sN_s}[k]$$

$$R_{r_{Txd}r_{Txd}}[k] = 2\left( R_{S_2S_2} + (-1)^{\left\lfloor \frac{k+1}{2} \right\rfloor}(-1)^{\left\lfloor \frac{k+2}{2} \right\rfloor} R_{D_1D_1} + (-1)^{\left\lfloor \frac{k+2}{2} \right\rfloor} R_{S_2D_1} + (-1)^{\left\lfloor \frac{k+1}{2} \right\rfloor} R_{D_1S_2} \right) + (-1)^{\left\lfloor \frac{k+1}{2} \right\rfloor}(-1)^{\left\lfloor \frac{k+2}{2} \right\rfloor} R_{N_dN_d}[k]$$

where, for $m = 1,2$ and $n = 1,2$

$$R_{S_mS_m} = S_m[k].conj(S_m[k+1]) = 2|h_m|^2 (\exp(j\Phi)(1 + \cos(2\Phi)))$$

$$R_{D_mD_m} = D_m[k].conj(D_m[k+1]) = 2|h_m|^2 (\exp(j\Phi)(1 - \cos(2\Phi)))$$

$$R_{S_mD_n} = S_m[k].conj(D_n[k+1]) = -2jh_mh_n^* \exp(j\Phi)\sin(2\Phi)$$

$$R_{N_s N_s} = N_s[k].conj\left(N_s[k+1]\right)$$

$$R_{N_d N_d} = N_d[k].conj\left(N_d[k+1]\right)$$

If k is even, one may demonstrate that:

$$R_{even}[k] = R_{r_{Txd}r_{Txd}}[k] + R_{r_{NoTxd}r_{NoTxd}}[k] = 4\exp(j\Phi)\left(|h_1|^2 + |h_2|^2\right)\cos(2\Phi) + R_{N_s N_s}[k] - R_{N_d N_d}[k]$$

And if k is odd,

$$R_{odd}[k] = R_{r_{Txd}r_{Txd}}[k] + R_{r_{NoTxd}r_{NoTxd}}[k] = 4\exp(j\Phi)\left(|h_1|^2 + |h_2|^2\right) + \left(R_{N_s N_s}[k] + R_{N_d N_d}[k]\right)$$

In order to attenuate the noise effect, we compute an average over several samples of $R_{even}[k]$ and $R_{odd}[k]$ as

$$R_{even,\,avr} = \frac{1}{N_2 - N_1}\sum_{k=N_1,\,k\,even}^{N_2} R_{even}[k]$$

$$= 4\exp(j\Phi)\left(|h_1|^2 + |h_2|^2\right)\cos(2\Phi) + \frac{1}{N_2 - N_1}\sum_{k=N_1,\,k\,even}^{N_2}\left(R_{N_s N_s}[k] - R_{N_d N_d}[k]\right)$$

$$R_{odd,\,avr} = \frac{1}{N_2 - N_1}\sum_{k=N_1,\,k\,odd}^{N_2} R_{odd}[k]$$

$$= 4\exp(j\Phi)\left(|h_1|^2 + |h_2|^2\right) + \frac{1}{N_2 - N_1}\sum_{k=N_1,\,k\,odd}^{N_2}\left(R_{N_s N_s}[k] + R_{N_d N_d}[k]\right)$$

Both of these two sums $R_{even,\,avr}$ and $R_{odd,\,avr}$ can be considered as independent estimators and the frequency offset estimation is given respectively by

$$\Delta f = \frac{1}{2\pi T}\arctan\left(\frac{\Im m\left(R_{even,\,avr}\right)}{\Re e\left(R_{even,\,avr}\right)}\right)$$

and

$$\Delta f = \frac{1}{2\pi T} \arctan\left( \frac{\Im m(R_{odd,\,avr})}{\Re e(R_{odd,\,avr})} \right)$$

The one based on $R_{even,\,avr}$ is dependent on the FO due to the *cos(2Φ)* and is expected to show poor results around

$$|\Phi| = \frac{\pi}{4} \text{ or } |\Phi| = \frac{3\pi}{4}$$

(i.e. FO=±1875 or FO=±5625)

Also, it should be noticed that this *cos (2Φ)* introduces a sign inversion for

$$|\Phi| \in \left[ \frac{\pi}{4}, \frac{3\pi}{4} \right]$$

Thus, in one particular advantageous embodiment, the two discrimators values $R_{even,aovr}$ and $R_{odd,\,avr}$ are accumulated as follows:

$$\text{If } \left| \Re e(R_{odd,\,avr}) \right| > \left| \Im m(R_{odd,\,avr}) \right|$$

$$R = R_{odd,\,avr} + R_{even,\,avr}$$

$$\text{else}$$

$$R = R_{odd,\,avr} - R_{even,\,avr}$$

The correlation $R$ is passed to the arctan function in order to extract the frequency offset estimate:

$$\Delta f = \frac{1}{2\pi T} \arctan\left( \frac{\Im m(R)}{\Re e(R)} \right)$$

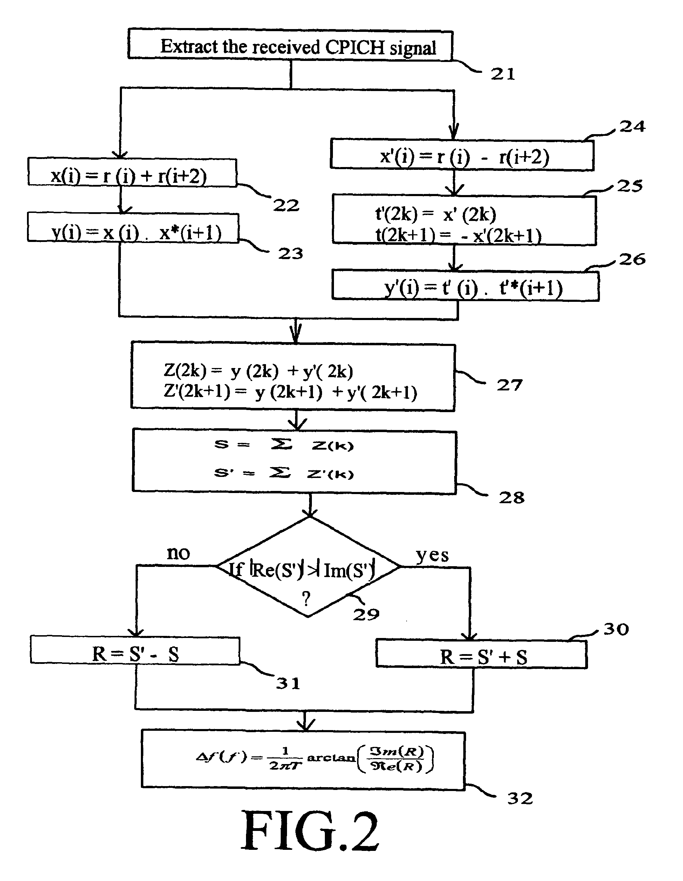

With respect to figure 2, there is now described one particular embodiment of a method for computing the frequency offset $\Delta f$ which provides both accuracy and a relatively wide range of frequency use.

In a step 21, the process extracts the received CPICH signal included in the CPICH channel. As known in the art, it is assumed that the signal received at the antenna of the user equipment is properly equalized, de-spreaded and descrambled in accordance with the W-CDMA standard. Such operations are well known to a skilled man and, therefore, do not need further development. It suffices to recall that the received despreaded signal is modulated with the appropriate code in order to extract the predetermined CPICH channel. Such channel generates the sum of the two pilot signals transmitted by the base station.

From step 21, two parallel sequences are performed in order to separate the two pilot channels, with a left branch based on steps 22-23 and a right branch based on steps 24-25-26.

Considering the left branch, one sees that the process proceeds to a step 22, the process proceeds with the computation of a first intermediate value x(i) in accordance with the formula:

$$x(i) = r(i) + r(i+2)$$

It can be seen that step 21 achieves the computation of $r_{NoTxd}[k]$ which was mentioned above:

$$r_{NoTxd}[k] = r[k] + r[k+2] = (1+j)\left(S_1[k] + (-1)^{\left\lfloor\frac{k+1}{2}\right\rfloor}D_2[k]\right) + N_s[k]$$

Then, in a step 23, the process proceeds with the computation of a second intermediate value y(i) derived from the first intermediate value x(i) in accordance with the formula:

$$y(i) = x(i) \cdot x^*(i+1)$$

with $x^*(i+1)$ being the conjugate value of $x(i+1)$.

Such second intermediate value corresponds to the computation of $R_{r_{NoTxd}r_{NoTxd}}[k]$ mentioned above.

Considering the right branch, one sees that, after completion of step 21, the process proceeds to a step 24, the process proceeds with the computation of a third intermediate value x'(i) in accordance with the formula:

$$x'(i) = r(i) - r(i+2)$$

Then, in a step 25, the process proceeds with the computation of a fourth intermediate value t(i) derived from the third intermediate value x'(i) in accordance with the formula:

$$t'(2k) = x'(2k)$$

and

$$t'(2k+1) = -x'(2k+1)$$

It can be seen that steps 24-25 achieves the computation of the value of $r_{txd}[k]$ which was mentioned above:

$$r_{Txd}[k] = (-1)^{\left\lfloor\frac{k+1}{2}\right\rfloor}(r[k] - r[k+2]) = (1+j)\left(S_2[k] + (-1)^{\left\lfloor\frac{k+1}{2}\right\rfloor}D_1[k]\right) + (-1)^{\left\lfloor\frac{k+1}{2}\right\rfloor}N_d[k]$$

Then, in a step 26, the process proceeds with the computation of a fifth intermediate value y' (i) derived from the fourth intermediate value t' (i) in accordance with the formula:

$$y'(i) = t'(i) \cdot t'^{*}(i+1)$$

where t'* (i+1) corresponds to the conjugate of the complex t' (i+1) .

Step 26 achieves the computation of $R_{r_{Txd}r_{Txd}}[k]$ mentioned above

Then, in a step 27, the process proceeds with the computation of a sixth and seventh intermediate values, respectively Z and Z' which are computed as follows:

$$Z(2k) = y(2k) + y'(2k)$$

$$Z'(2k+1) = y(2k+1) + y'(2k+1)$$

Then, in a step 28, the process proceeds with the average of the Z and Z' value over a period of N samples in order to respectively generate an eight and a ninth values S and S' in accordance with the following formulation:

$$S = 1/N \sum Z(k) \quad \text{for } k = 1 \text{ to } N$$

$$S' = 1/N \sum Z'(k) \quad \text{for } k = 1 \text{ to } N$$

The process then proceeds with a step 29 which is a test for determining whether the absolute value of the real part of S' is superior to the absolute value of the imaginary part of S', in which case, the process proceeds with a step 30 where the two values S and S' are added in order to generate a tenth intermediate value R as follows:

$$R = S' + S$$

The process then proceeds to a step 32.

If the absolute value of the real part of S' is inferior to the absolute value of the imaginary part of S' in step 29, the process proceeds to a step 31 where the value of S is substracted from that of S' in order to compute R in accordance with the formula:

$$R = S' - S$$

After completion of steps 30 and 31, the process proceeds to a step 32 where the frequency offset estimation is computed as follows:

$$\Delta f = \frac{1}{2\pi T} \arctan\left( \frac{\Im m(R)}{\Re e(R)} \right)$$

where $|\Delta f| \le \dfrac{1}{2T}$, $e(R)$ and $T = \dfrac{1}{15}10^{-3}$ $m(R)$ are the real and imaginary parts, respectively of the tenth intermediate value R.

The method which was described above shows a sampling period of T, which allows coverage of possible estimation range for a value of

$$|\Delta f| \le \frac{1}{2T}$$

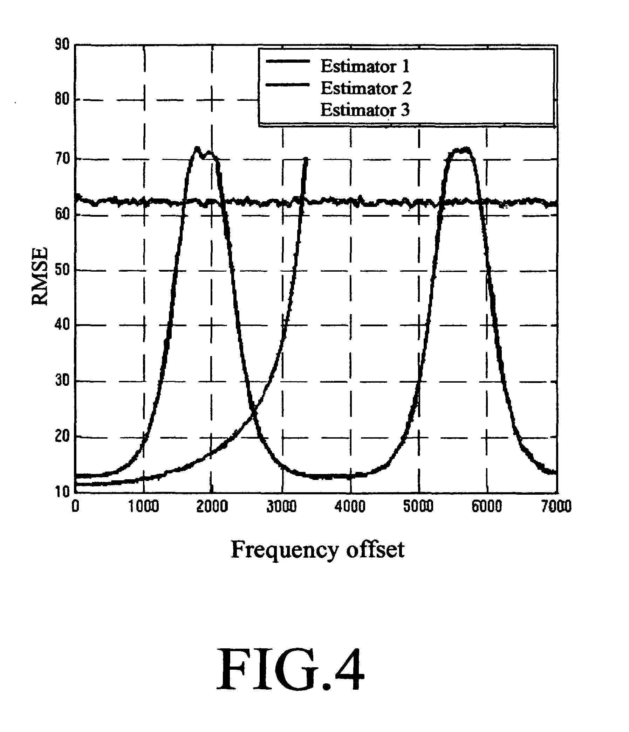

Figures 4, 5 and 6 are comparative flow charts allowing comparison of the process of the invention which was described above (and referred to as scheme n°3) with respect of two prior art method, namely scheme 1 and 2.

Figures 4 represents the Root Mean Squared Error (RMSE) of the frequency offset estimate (FOE) as a function of the frequency offset (FO) for AWGN and a SNR=0dB. It should be noticed that a prior art method - referred to as scheme 2 - only have limited performances to FO<3500Hz since this estimator cannot estimate larger FOs. The curve which is represented highlights the expected behaviors of the different estimators. As expected, estimator 3 (which is the one of the invention) shows degraded performances around 1875Hz and 5625 Hz which is equivalent to the degradation shown by scheme 2 around 3.5KHz. However, our proposed estimator has performance very close to those of estimator 2 for small FOs, which corresponds to the working regime after the AFC loop convergence. Estimator 2 has the advantage of covering a much larger interval.

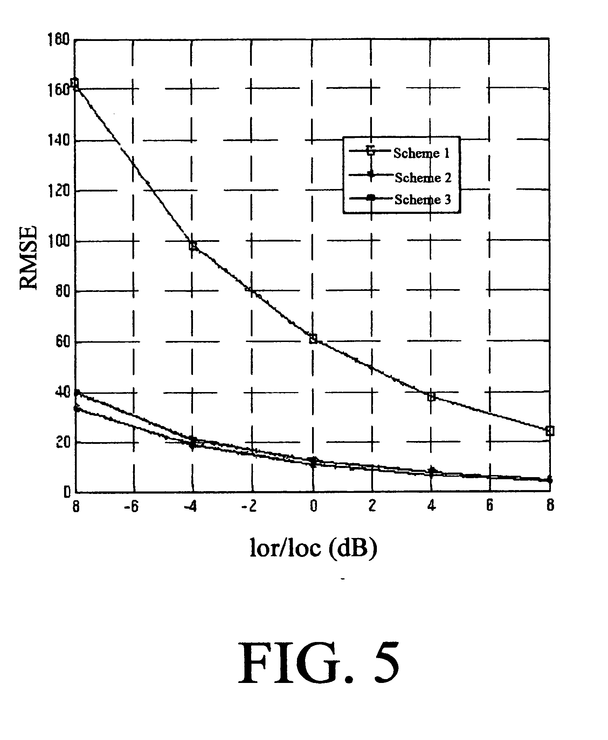

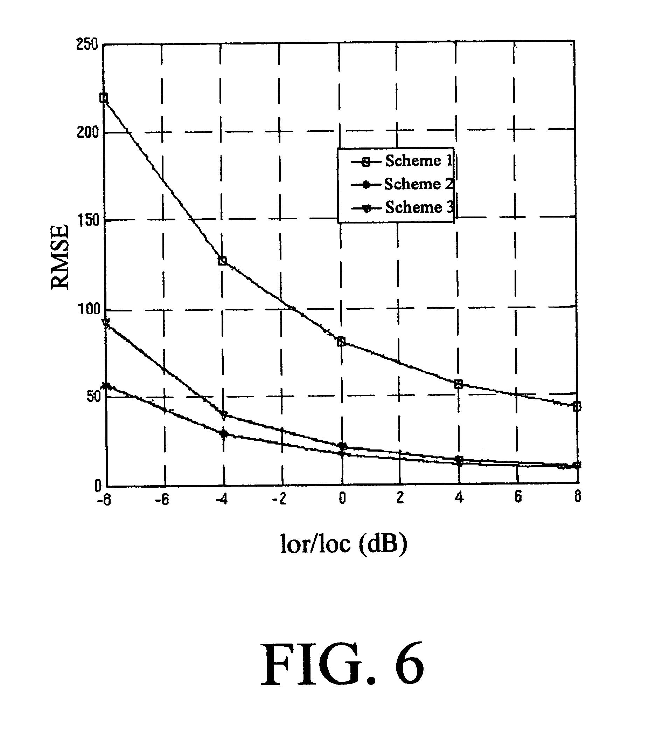

Figures 5 and 6 plot the FOE's RMSE as a function of lor/loc for FO=0Hz (for AWGN and case 1 propagation scenarios respectively).

The considered SPW simulations setups are as follows:

For AWGN:

Measurement Reference Channel: 12.2Kbps
lorx/loc=-i dB
DPCH_Ec/lorx= - 16.6 dB
loc=-60 dBm

For fading multi-path case1:

Measurement Reference Channel: 12.2Kbps lorx/loc=9 dB DPCH_Ec/lorx = - 15 dB loc = -60 dBm
Multi-path propagation: 2 paths

    o Powers: 0dB,-10dB
    o Delays: 0ns, 976ns

**Claims**

1. Process for computing an estimation of the frequency offset in a receiver for a UMTS communication network said receiver receives the signal transmitted by two antennas and including two Common Pilot CHannels, CPICH, said process involving a pre-processing based on the separation of the two signals by means of the computation of

$$r_{NoTxd}[k] = r[k] + r[k+2] = (1+j)\left( S_1[k] + (-1)^{\left\lfloor \frac{k+1}{2} \right\rfloor} D_2[k] \right) + N_s[k]$$

$$r_{Txd}[k] = (-1)^{\left|\frac{k+1}{2}\right|}(r[k] - r[k+2]) = (1+j)\left(S_2[k] + (-1)^{\left|\frac{k+1}{2}\right|}D_1[k]\right) + (-1)^{\left|\frac{k+1}{2}\right|}N_d[k]$$

Where

r[k] is the received signal at the instant k;

$r_{NoTxd}$ and $r_{Txd}$ are the result of said pre-processing;

where for $m = 1,2$

$$S_m[k] = h_m \exp(j\varphi_0)(\exp(jk\Phi) + \exp(j(k+2)\Phi))$$

$$D_m[2k] = h_m \exp(j\varphi_0)(\exp(jk\Phi) - \exp(j(k+2)\Phi))$$

$$N_s[k] = n[k] + n[k+2]$$

$$N_d[k] = n[k] - n[k+2]$$

n[k] corresponding to the noise components in the received signal at instant k

$h_m$ corresponding to the channel response for antenna m (m=1, 2),

j corresponding to the imaginary complex such as $j^2 = -1$ and $\Phi = 2\pi\Delta f T$

said pre-processing being then followed by an estimation of the frequency offset of the received signal using the result of said pre-processing step.

2. Process according to claim 1 **characterized in that** the frequency offset estimation is based on one estimator $R_{even,\,avr}$ computed in accordance with the following formulas:

$$R_{even,avr} = \frac{1}{N_2 - N_1}\sum_{k=N_1,\,k\,even}^{N_2}R_{even}[k]$$

with

$$R_{even}[k] = R_{r_{Txd}r_{Txd}}[k] + R_{r_{NoTxd}r_{NoTxd}}[k] = 4\exp(j\Phi)(|h_1|^2 + |h_2|^2)\cos(2\Phi) + R_{N_sN_s}[k] - R_{N_dN_d}[k]$$

in which

$$R_{r_{NoTxd}r_{NoTxd}}[k] = r_{NoTxd}[k] * conj(r_{NoTxd}[k+1])$$

$$= 2\left(R_{S_1S_1} + (-1)^{\left\lfloor\frac{k+1}{2}\right\rfloor}(-1)^{\left\lfloor\frac{k+2}{2}\right\rfloor}R_{D_2D_2} + (-1)^{\left\lfloor\frac{k+2}{2}\right\rfloor}R_{S_1D_2} + (-1)^{\left\lfloor\frac{k+1}{2}\right\rfloor}R_{D_2S_1}\right) + R_{N_sN_s}[k]$$

$$R_{r_{Txd}r_{Txd}}[k] = r_{Txd}[k] * conj(r_{Txd}[k+1])$$

$$= 2\left(R_{S_2S_2} + (-1)^{\left\lfloor\frac{k+1}{2}\right\rfloor}(-1)^{\left\lfloor\frac{k+2}{2}\right\rfloor}R_{D_1D_1} + (-1)^{\left\lfloor\frac{k+2}{2}\right\rfloor}R_{S_2D_1} + (-1)^{\left\lfloor\frac{k+1}{2}\right\rfloor}R_{D_1S_2}\right) + (-1)^{\left\lfloor\frac{k+1}{2}\right\rfloor}(-1)^{\left\lfloor\frac{k+2}{2}\right\rfloor}R_{N_dN_d}[k]$$

where, for $m = 1,2$ and $n = 1,2$

$$R_{S_mS_m} = S_m[k].conj(S_m[k+1]) = 2|h_m|^2(\exp(j\Phi)(1+\cos(2\Phi)))$$

$$R_{D_mD_m} = D_m[k].conj(D_m[k+1]) = 2|h_m|^2(\exp(j\Phi)(1-\cos(2\Phi)))$$

$$R_{S_mD_n} = S_m[k].conj(D_n[k+1]) = -2jh_mh_n^* \exp(j\Phi)\sin(2\Phi)$$

$$R_{N_sN_s} = N_s[k].conj(N_s[k+1])$$

$$R_{N_dN_d} = N_d[k].conj(N_d[k+1])$$

The frequency offset estimate being provided by the formula:

$$\Delta f = \frac{1}{2\pi T}\arctan\left(\frac{\Im m(R)}{\Re e(R)}\right)$$

3. Process according to claim 1 **characterized in that** the frequency offset estimation is based on one estimator $R_{odd, avr}$ computed in accordance with the following formulas:

$$R_{odd, avr} = \frac{1}{N_2 - N_1}\sum_{k=N_1, k\,odd}^{N_2}R_{odd}[k]$$

with

$$R_{odd}[k] = R_{r_{Txd}r_{Txd}}[k] + R_{r_{NoTxd}r_{NoTxd}}[k] = 4\exp(j\Phi)(|h_1|^2 + |h_2|^2) + (R_{N_sN_s}[k] + R_{N_dN_d}[k])$$

in which

$$R_{r_{NoTxd}r_{NoTxd}}[k] = r_{NoTxd}[k] * conj(r_{NoTxd}[k+1])$$

$$= 2\left(R_{S_1S_1} + (-1)^{\left\lfloor\frac{k+1}{2}\right\rfloor}(-1)^{\left\lfloor\frac{k+2}{2}\right\rfloor}R_{D_2D_2} + (-1)^{\left\lfloor\frac{k+2}{2}\right\rfloor}R_{S_1D_2} + (-1)^{\left\lfloor\frac{k+1}{2}\right\rfloor}R_{D_2S_1}\right) + R_{N_sN_s}[k]$$

$$R_{r_{Txd}r_{Txd}}[k] = r_{Txd}[k] * conj(r_{Txd}[k+1])$$

$$= 2\left(R_{S_2S_2} + (-1)^{\left\lfloor\frac{k+1}{2}\right\rfloor}(-1)^{\left\lfloor\frac{k+2}{2}\right\rfloor}R_{D_1D_1} + (-1)^{\left\lfloor\frac{k+2}{2}\right\rfloor}R_{S_2D_1} + (-1)^{\left\lfloor\frac{k+1}{2}\right\rfloor}R_{D_1S_2}\right) + (-1)^{\left\lfloor\frac{k+1}{2}\right\rfloor}(-1)^{\left\lfloor\frac{k+2}{2}\right\rfloor}R_{N_dN_d}[k]$$

where, for $m$ = 1,2 and $n$ = 1,2

$$R_{S_mS_m} = S_m[k].conj(S_m[k+1]) = 2|h_m|^2\left(\exp(j\Phi)(1+\cos(2\Phi))\right)$$

$$R_{D_mD_m} = D_m[k].conj(D_m[k+1]) = 2|h_m|^2\left(\exp(j\Phi)(1-\cos(2\Phi))\right)$$

$$R_{S_mD_n} = S_m[k].conj(D_n[k+1]) = -2jh_mh_n^*\exp(j\Phi)\sin(2\Phi)$$

$$R_{N_sN_s} = N_s[k].conj(N_s[k+1])$$

$$R_{N_dN_d} = N_d[k].conj(N_d[k+1])$$

The frequency offset estimate being provided by the formula:

$$\Delta f = \frac{1}{2\pi T}\arctan\left(\frac{\Im m(R)}{\Re e(R)}\right)$$

4. Process according claim 2 and claim 3 **characterized in that** the frequency offset estimation is computed on the basis of both $R_{odd,\,avr}$ and $R_{even,\,avr}$ in accordance with the formula:

$$\text{If } \left|\Re e(R_{odd,avr})\right| > \left|\Im m(R_{odd,avr})\right|$$

$$R = R_{odd,avr} + R_{even,avr}$$

else

$$R = R_{odd,avr} - R_{even,avr}$$

and the frequency offset estimate being provided by the formula:

$$\Delta f = \frac{1}{2\pi T} \arctan\left(\frac{\Im m(R)}{\Re e(R)}\right)$$

5.  Process for computing an estimation of the frequency offset in a receiver for a UMTS communication network said receiver receives the signal transmitted by two antennas and including two Common Pilot CHannels, CPICH, said process involving the steps of :

- extracting (21) the received CPICH signal included in the CPICH channel;
- performing a first processing branch (left) comprising the steps of:

  - computing (22) a first intermediate value x(i) in accordance with the formula:

$$x(i) = r(i) + r(i+2)$$

  - computing (23) a second intermediate value y(i) derived from the first intermediate value x(i) in accordance with the formula:

$$y(i) = x(i) \cdot x^*(i+1)$$

- performing a second processing branch (right) comprising the steps of:

  - computing (24) a third intermediate value x'(i) in accordance with the formula:

$$x'(i) = r(i) - r(i+2)$$

  - computing (25) a fourth intermediate value t(i) derived from the third intermediate value x'(i) in accordance with the formula:

$$t'(2k) = x'(2k)$$

and

$$t'(2k+1) = -x'(2k+1)$$

  - computing (26) a fifth intermediate value y'(i) derived from the fourth intermediate value t'(i) in accordance with the formula:

$$y'(i) = t'(i) \cdot t'^*(i+1)$$

- computing (27) a sixth and seventh intermediate values Z and Z' in accordance with the formulas:

$$Z(2k) = y(2k) + y'(2k)$$

$$Z'(2k+1) = y(2k+1) + y'(2k+1)$$

- respectively computing an eight and a ninth values S and S' in accordance with the following formulation:

$$S = 1/N \sum Z(k) \quad \text{for } k = 1 \text{ to } N$$

$$S' = 1/N \sum Z'(k) \quad \text{for } k = 1 \text{ to } N$$

- performing a test (29) to determine whether the absolute value of the real part of S' is superior to the absolute value of the imaginary part of S' and, in that case, computing (30) a tenth intermediate value R as follows:

$$R = S' + S$$

And, conversely if the absolute value of the real part of S' is inferior to the absolute value of imaginary part of S', computing (31) R in accordance with the formula:

$$R = S' - S$$

Then, computing (32) the offset estimation in accordance with the formula:

$$\Delta f = \frac{1}{2\pi T} \arctan\left(\frac{\Im m(R)}{\Re e(R)}\right)$$

where $|\Delta f| \leq \frac{1}{2T}$, $\Re e(R)$ and $T = \frac{1}{15} 10^{-3}$ $\Im m(R)$ are the real and imaginary parts, respectively of the tenth intermediate value R.

6. Receiver for a UMST communication system comprising means for receiving the signals transmitted by two antennas and including two Common Pilot CHannels, CPICH, said receiver comprising means for separating the two signals based on the computation of :

$$r_{NoTxd}[k] = r[k] + r[k+2] = (1+j)\left(S_1[k] + (-1)^{\left\lfloor\frac{k+1}{2}\right\rfloor}D_2[k]\right) + N_s[k]$$

$$r_{Txd}[k] = (-1)^{\left\lfloor\frac{k+1}{2}\right\rfloor}(r[k] - r[k+2]) = (1+j)\left(S_2[k] + (-1)^{\left\lfloor\frac{k+1}{2}\right\rfloor}D_1[k]\right) + (-1)^{\left\lfloor\frac{k+1}{2}\right\rfloor}N_d[k]$$

Where

r[k] is the received signal at the instant k;
$r_{NoTxd}$ and $r_{Txd}$ are the result of said pre-processing;

Where for *m* = 1,2

$$S_m[k] = h_m \exp(j\varphi_0)(\exp(jk\Phi) + \exp(j(k+2)\Phi))$$

$$D_m[2k] = h_m \exp(j\varphi_0)(\exp(jk\Phi) - \exp(j(k+2)\Phi))$$

$$N_s[k] = n[k] + n[k+2]$$

$$N_d[k] = n[k] - n[k+2]$$

*n[k] corresponding to the noise components in the received signal at instant* k
*$h_m$ corresponding to the channel response for antenna m (m=1, 2),*
*j corresponding to the imaginary complex such as $j^2$ = -1 and $\Phi$ = 2 $\pi$ $\Delta f$ T and further comprising means for computing an estimation of the frequency offset using the result of said pre-processing step.*

7.  Receiver according to claim 6 **characterized in that** it further includes means for estimating the frequency offset based on one estimator $R_{even,\,avr}$ computed in accordance with the following formulas:

$$R_{even,\,avr} = \frac{1}{N_2 - N_1}\sum_{k=N_1,\,k\,even}^{N_2}R_{even}[k]$$

with

$$R_{even}[k] = R_{r_{Txd}r_{Txd}}[k] + R_{r_{NoTxd}r_{NoTxd}}[k] = 4\exp(j\Phi)(|h_1|^2 + |h_2|^2)\cos(2\Phi) + R_{N_sN_s}[k] - R_{N_dN_d}[k]$$

in which

$$R_{r_{NoTxd}r_{NoTxd}}[k] = r_{NoTxd}[k] * conj(r_{NoTxd}[k+1])$$

$$= 2\left(R_{S_1 S_1} + (-1)^{\left\lfloor \frac{k+1}{2} \right\rfloor}(-1)^{\left\lfloor \frac{k+2}{2} \right\rfloor}R_{D_2 D_2} + (-1)^{\left\lfloor \frac{k+2}{2} \right\rfloor}R_{S_1 D_2} + (-1)^{\left\lfloor \frac{k+1}{2} \right\rfloor}R_{D_2 S_1}\right) + R_{N_s N_s}[k]$$

$$R_{r_{Txd}r_{Txd}}[k] = r_{Txd}[k] * conj(r_{Txd}[k+1])$$

$$= 2\left(R_{S_2 S_2} + (-1)^{\left\lfloor \frac{k+1}{2} \right\rfloor}(-1)^{\left\lfloor \frac{k+2}{2} \right\rfloor}R_{D_1 D_1} + (-1)^{\left\lfloor \frac{k+2}{2} \right\rfloor}R_{S_2 D_1} + (-1)^{\left\lfloor \frac{k+1}{2} \right\rfloor}R_{D_1 S_2}\right) + (-1)^{\left\lfloor \frac{k+1}{2} \right\rfloor}(-1)^{\left\lfloor \frac{k+2}{2} \right\rfloor}R_{N_d N_d}[k]$$

where, for $m$ = 1,2 and $n$ = 1,2

$$R_{S_m S_m} = S_m[k].conj(S_m[k+1]) = 2|h_m|^2(\exp(j\Phi)(1 + \cos(2\Phi)))$$

$$R_{D_m D_m} = D_m[k].conj(D_m[k+1]) = 2|h_m|^2(\exp(j\Phi)(1 - \cos(2\Phi)))$$

$$R_{S_m D_n} = S_m[k].conj(D_n[k+1]) = -2jh_m h_n^* \exp(j\Phi)\sin(2\Phi)$$

$$R_{N_s N_s} = N_s[k].conj(N_s[k+1])$$

$$R_{N_d N_d} = N_d[k].conj(N_d[k+1])$$

The frequency offset estimate being provided by the formula:

$$\Delta f = \frac{1}{2\pi T}\arctan\left(\frac{\Im m(R)}{\Re e(R)}\right)$$

8. Receiver according to claim 6 **characterized in that** it further includes means for estimating the frequency offset based on one estimator $R_{odd,\,avr}$ computed in accordance with the following formulas:

$$R_{odd,\,avr} = \frac{1}{N_2 - N_1}\sum_{k=N_1, k\,odd}^{N_2} R_{odd}[k]$$

with

$$R_{odd}[k] = R_{r_{Txd}r_{Txd}}[k] + R_{r_{NoTxd}r_{NoTxd}}[k] = 4\exp(j\Phi)\left(|h_1|^2 + |h_2|^2\right) + \left(R_{N_sN_s}[k] + R_{N_dN_d}[k]\right)$$

in which

$$R_{r_{NoTxd}r_{NoTxd}}[k] = r_{NoTxd}[k] * conj(r_{NoTxd}[k+1])$$

$$= 2\left(R_{S_1S_1} + (-1)^{\left\lfloor \frac{k+1}{2}\right\rfloor}(-1)^{\left\lfloor\frac{k+2}{2}\right\rfloor}R_{D_2D_2} + (-1)^{\left\lfloor\frac{k+2}{2}\right\rfloor}R_{S_1D_2} + (-1)^{\left\lfloor\frac{k+1}{2}\right\rfloor}R_{D_2S_1}\right) + R_{N_sN_s}[k]$$

$$R_{r_{Txd}r_{Txd}}[k] = r_{Txd}[k] * conj(r_{Txd}[k+1])$$

$$= 2\left(R_{S_2S_2} + (-1)^{\left\lfloor \frac{k+1}{2}\right\rfloor}(-1)^{\left\lfloor\frac{k+2}{2}\right\rfloor}R_{D_1D_1} + (-1)^{\left\lfloor\frac{k+2}{2}\right\rfloor}R_{S_2D_1} + (-1)^{\left\lfloor\frac{k+1}{2}\right\rfloor}R_{D_1S_2}\right) + (-1)^{\left\lfloor\frac{k+1}{2}\right\rfloor}(-1)^{\left\lfloor\frac{k+2}{2}\right\rfloor}R_{N_dN_d}[k]$$

where, for *m* = 1,2 and *n* = 1,2

$$R_{S_mS_m} = S_m[k].conj(S_m[k+1]) = 2|h_m|^2\left(\exp(j\Phi)(1+\cos(2\Phi))\right)$$

$$R_{D_mD_m} = D_m[k].conj(D_m[k+1]) = 2|h_m|^2\left(\exp(j\Phi)(1-\cos(2\Phi))\right)$$

$$R_{S_mD_n} = S_m[k].conj(D_n[k+1]) = -2jh_m h_n^* \exp(j\Phi)\sin(2\Phi)$$

$$R_{N_sN_s} = N_s[k].conj(N_s[k+1])$$

$$R_{N_dN_d} = N_d[k].conj(N_d[k+1])$$

The frequency offset estimate being provided by the formula:

$$\Delta f = \frac{1}{2\pi T}\arctan\left(\frac{\Im m(R)}{\Re e(R)}\right)$$

9. Receiver according to claim 7 or 8 **characterized in that** it further includes means for estimating the frequency offset on the basis of both $R_{odd,\,avr}$ and $R_{even,\,avr}$ in accordance with the formula:

$$\text{If } \left|\Re e\left(R_{odd,\,avr}\right)\right| > \left|\Im m\left(R_{odd,\,avr}\right)\right|$$

$$R = R_{odd,\,avr} + R_{even,\,avr}$$

else

$$R = R_{odd,\,avr} - R_{even,\,avr}$$

and the frequency offset estimate being provided by the formula:

$$\Delta f = \frac{1}{2\pi T}\arctan\left(\frac{\Im m(R)}{\Re e(R)}\right)$$

**10.** Receiver for a UMTS communication network comprising means for receiving the signal transmitted by two antennas and including two Common Pilot CHannels, CPICH, said receiver comprising:

- means for extracting (21) the received CPICH signal included in the CPICH channel;
- means for performing a first processing branch (left) comprising the steps of:

  - means for computing (22) a first intermediate value x(i) in accordance with the formula:

$$x(i) = r\,(i) + r(i+2)$$

  - means for computing (23) a second intermediate value y(i) derived from the first intermediate value x(i) in accordance with the formula:

$$y(i) = x(i)\,.\,\,x^{\star}\,(i+1)$$

- means for performing a second processing branch (right) comprising the steps of:

  - means for computing (24) a third intermediate value x'(i) in accordance with the formula:

$$x'(i) = r\,(i) - r(i+2)$$

  - means for computing (25) a fourth intermediate value t(i) derived from the third intermediate value x'(i) in accordance with the formula:

$$t'(2k) = x'(2k)$$

and

$$t'(2k+1) = -\,x'(2k+1)$$

  - means for computing (26) a fifth intermediate value y'(i) derived from the fourth intermediate value t'(i) in accordance with the formula:

$$y'(i) = t'(i) \cdot t'^*(i+1)$$

- means for computing (27) a sixth and seventh intermediate values Z and Z' in accordance with the formulas:

$$Z(2k) = y(2k) + y'(2k)$$

$$Z'(2k+1) = y(2k+1) + y'(2k+1)$$

- respectively computing an eight and a ninth values S and S' in accordance with the following formulation:

$$S = \Sigma \ Z(k) \quad \text{for } k = 1 \text{ to } N$$

$$S' = \Sigma \ Z'(k) \quad \text{for } k = 1 \text{ to } N$$

- means for performing a test (29) to determine whether the absolute value of the real part of S' is superior to the absolute value of the imaginary part of S' and, in that case, computing (30) a tenth intermediate value R as follows:

$$R = S' + S$$

And, conversely if the absolute value of the real part of S' is inferior to the absolute value of the imaginary part of S', means for computing (31) R in accordance with the formula:

$$R = S' - S$$

Means for computing (32) the offset estimation in accordance with the formula:

$$\Delta f = \frac{1}{2\pi T} \arctan\left(\frac{\Im m(R)}{\Re e(R)}\right)$$

where $|\Delta f| \leq \dfrac{1}{2T}$, $e(R)$ and $T = \dfrac{1}{15} 10^{-3}$ $m(R)$ are the real and imaginary parts, respectively of the tenth intermediate value $R$.

11. Mobile telephone for a UMTS communication network comprising the receiver as defined in claim 6 to 10.

12. Mobile telephone according to claim 11 **characterized in that** it is embodied in a Portable Document Assistant PDA.

**Patentansprüche**

1. Verfahren zur Berechnung einer Schätzung des Frequenz-Offset in einem Empfänger für ein UMTS-Kommunikationsnetz, wobei der Empfänger das Signal empfängt, das von zwei Antennen übertragen wird, und zwei gemeinsame Pilotsignal-Kanäle (Common Pilot Channels) CPICH aufweist, wobei das Verfahren eine Vorverarbeitung umfasst basierend auf der Trennung der beiden Signale mittels Berechnung von:

$$r_{NoTxd}[k] = r[k] + r[k+2] = (1+j)\left(S_1[k] + (-1)^{\left\lfloor \frac{k+1}{2} \right\rfloor} D_2[k]\right) + N_s[k]$$

$$r_{Txd}[k] = (-1)^{\left\lfloor \frac{k+1}{2} \right\rfloor}(r[k] - r[k+2]) = (1+j)\left(S_2[k] + (-1)^{\left\lfloor \frac{k+1}{2} \right\rfloor} D_1[k]\right) + (-1)^{\left\lfloor \frac{k+1}{2} \right\rfloor} N_d[k]$$

wobei

r[k] dem empfangenen Signal zum Zeitpunkt k entspricht;
$r_{NoTxd}$ und $r_{Txd}$ den Ergebnissen der Vorverarbeitung entsprechen;

wobei für m = 1, 2 gilt:

$$S_m[k] = h_m \exp(j\varphi_0)\left(\exp(jk\Phi) + \exp(j(k+2)\Phi)\right)$$

$$D_m[2k] = h_m \exp(j\varphi_0)\left(\exp(jk\Phi) - \exp(j(k+2)\Phi)\right)$$

$$N_s[k] = n[k] + n[k+2]$$

$$N_d[k] = n[k] - n[k+2]$$

wobei n[k] den Rauschanteilen in dem empfangenen Signal zum Zeitpunkt k entsprechen,
$h_m$ der Kanalantwort für Antenne m (m = 1, 2) entspricht,
j dem imaginären Komplex wie etwa $j^2$ = -1 und $\phi$ = 2 $\pi$ $\Delta T$ entspricht,

wobei der Vorverarbeitung dann eine Schätzung des Frequenz-Offset des empfangenen Signals folgt unter Verwendung des Ergebnisses der Vorverarbeitungs-Schritts.

2. Verfahren nach Anspruch 1, **dadurch gekennzeichnet, dass** die Frequenz-Offset-Schätzung auf einer Schätzgröße $R_{even, avr}$ beruht, die gemäß der folgenden Formeln berechnet wird:

$$R_{even, avr} = \frac{1}{N_2 - N_1} \sum_{k=N_1, k \, even}^{N_2} R_{even}[k]$$

mit

$$R_{even}[k] = R_{r_{Txd}r_{Txd}}[k] + R_{r_{NoTxd}r_{NoTxd}}[k] = 4\exp(j\Phi)\left(|h_1|^2 + |h_2|^2\right)\cos(2\Phi) + R_{N_s N_s}[k] - R_{N_d N_d}[k]$$

wobei

$$R_{r_{NoTxd}r_{NoTxd}}[k] = r_{NoTxd}[k]^* \, conj\big(r_{NoTxd}[k+1]\big)$$

$$= 2\left(R_{S_1 S_1} + (-1)^{\left\lfloor \frac{k+1}{2} \right\rfloor}(-1)^{\left\lfloor \frac{k+2}{2} \right\rfloor}R_{D_1 D_1} + (-1)^{\left\lfloor \frac{k+2}{2} \right\rfloor}R_{S_1 D_1} + (-1)^{\left\lfloor \frac{k+1}{2} \right\rfloor}R_{D_1 S_1}\right) + R_{N_s N_s}[k]$$

$$R_{r_{Txd}r_{Txd}}[k] = r_{Txd}[k]^* \, conj\big(r_{Txd}[k+1]\big)$$

$$= 2\left(R_{S_2 S_2} + (-1)^{\left\lfloor \frac{k+1}{2} \right\rfloor}(-1)^{\left\lfloor \frac{k+2}{2} \right\rfloor}R_{D_2 D_2} + (-1)^{\left\lfloor \frac{k+2}{2} \right\rfloor}R_{S_2 D_2} + (-1)^{\left\lfloor \frac{k+1}{2} \right\rfloor}R_{D_2 S_2}\right) + (-1)^{\left\lfloor \frac{k+1}{2} \right\rfloor}(-1)^{\left\lfloor \frac{k+2}{2} \right\rfloor}R_{N_d N_d}[k]$$

wobei für m = 1, 2 und n = 1, 2 gilt:

$$R_{S_m S_m} = S_m[k].conj\big(S_m[k+1]\big) = 2|h_m|^2\big(\exp(j\Phi)(1 + \cos(2\Phi))\big)$$

$$R_{D_m D_m} = D_m[k].conj\big(D_m[k+1]\big) = 2|h_m|^2\big(\exp(j\Phi)(1 - \cos(2\Phi))\big)$$

$$R_{S_m D_n} = S_m[k].conj\big(D_n[k+1]\big) = -2jh_m h_n^*\exp(j\Phi)\sin(2\Phi)$$

$$R_{N_s N_s} = N_s[k].conj\big(N_s[k+1]\big)$$

$$R_{N_d N_d} = N_d[k].conj\big(N_d[k+1]\big)$$

und die Frequenz-Offset-Schätzung durch die Formel bereitgestellt wird:

$$\Delta f = \frac{1}{2\pi T}\arctan\left(\frac{\Im m(R)}{\Re e(R)}\right)$$

3.  Verfahren nach Anspruch 1, **dadurch gekennzeichnet, dass** die Frequenz-Offset-Schätzung auf einer Schätzgröße R odd, avr beruht, die gemäß der folgenden Formeln berechnet wird:

$$R_{odd,\,avr} = \frac{1}{N_2 - N_1}\sum_{k=N_1,\,k\,odd}^{N_2}R_{odd}[k]$$

mit

$$R_{odd}[k] = R_{r_{Txd}r_{Txd}}[k] + R_{r_{NoTxd}r_{NoTxd}}[k] = 4\exp(j\Phi)\big(|h_1|^2 + |h_2|^2\big) + \big(R_{N_s N_s}[k] + R_{N_d N_d}[k]\big)$$

wobei

$$R_{r_{NoTxd}r_{NoTxd}}[k] = r_{NoTxd}[k] * conj(r_{NoTxd}[k+1])$$

$$= 2\left(R_{S_1S_1} + (-1)^{\left\lfloor\frac{k+1}{2}\right\rfloor}(-1)^{\left\lfloor\frac{k-2}{2}\right\rfloor}R_{D_2D_2} + (-1)^{\left\lfloor\frac{k+2}{2}\right\rfloor}R_{S_1D_2} + (-1)^{\left\lfloor\frac{k+1}{2}\right\rfloor}R_{D_2S_1}\right) + R_{N_sN_s}[k]$$

$$R_{r_{Txd}r_{Txd}}[k] = r_{Txd}[k] * conj(r_{Txd}[k+1])$$

$$= 2\left(R_{S_1S_1} + (-1)^{\left\lfloor\frac{k+1}{2}\right\rfloor}(-1)^{\left\lfloor\frac{k+2}{2}\right\rfloor}R_{D_1D_1} + (-1)^{\left\lfloor\frac{k+2}{2}\right\rfloor}R_{S_1D_1} + (-1)^{\left\lfloor\frac{k+1}{2}\right\rfloor}R_{D_1S_1}\right) + (-1)^{\left\lfloor\frac{k+1}{2}\right\rfloor}(-1)^{\left\lfloor\frac{k+2}{2}\right\rfloor}R_{N_dN_d}[k]$$

wobei für m = 1, 2 und n = 1, 2 gilt:

$$R_{S_mS_m} = S_m[k].conj(S_m[k+1]) = 2|h_m|^2(\exp(j\Phi)(1+\cos(2\Phi)))$$

$$R_{D_mD_m} = D_m[k].conj(D_m[k+1]) = 2|h_m|^2(\exp(j\Phi)(1-\cos(2\Phi)))$$

$$R_{S_mD_n} = S_m[k].conj(D_n[k+1]) = -2jh_mh_n^*\exp(j\Phi)\sin(2\Phi)$$

$$R_{N_sN_s} = N_s[k].conj(N_s[k+1])$$

$$R_{N_dN_d} = N_d[k].conj(N_d[k+1])$$

und die Frequenz-Offset-Schätzung durch die Formel bereitgestellt wird:

$$\Delta f = \frac{1}{2\pi T}\arctan\left(\frac{\Im m(R)}{\Re e(R)}\right)$$

4. Verfahren nach Anspruch 2 und 3, **dadurch gekennzeichnet, dass** die Frequenz-Offset-Schätzung basierend auf beiden Größen R $_{odd, avr}$ und R $_{even, avr}$ gemäß der Formel berechnet wird:

$$\text{If } \left|\Re e(R_{odd, avr})\right| > \left|\Im m(R_{odd, avr})\right|$$

$$R = R_{odd, avr} + R_{even, avr}$$

else

$$R = R_{odd, avr} - R_{even, avr}$$

und die Frequenz-Offset-Schätzung durch die Formel bereitgestellt wird:

$$\Delta f = \frac{1}{2\pi T} \arctan\left(\frac{\Im m(R)}{\Re e(R)}\right)$$

**5.** Verfahren zur Berechnung einer Schätzung des Frequenz-Offset in einem Empfänger für ein UMTS-Kommunikationsnetz, wobei der Empfänger das Signal empfängt, das von zwei Antennen übertragen wird, und zwei gemeinsame Pilotsignal-Kanäle (Common Pilot Channels) CPICH aufweist, wobei das Verfahren folgende Schritte umfasst:

- Extrahieren (21) des empfangenen CPICH Signals enthaltend in dem CPICH-Kanal;
- Ausführen eines ersten Verarbeitungszweigs (links) umfassend die Schritte:

- Berechnen (22) eines ersten Zwischenwertes x (i) gemäß der Formel:

$$x(i) = r(i) + r(i+2)$$

- Berechnen (23) eines zweiten Zwischenwertes y (i) aus dem ersten Zwischenwert x (i) gemäß der Formel:

$$y(i) = x(i) \cdot x^*(i+1)$$

- Ausführen eines zweiten Verarbeitungszweigs (rechts) die folgenden Schritte umfasst:

- Berechnen (24) eines dritten Zwischenwertes x'(i) gemäß der Formel:

$$x'(i) = r(i) + r(i+2)$$

- Berechnen (25) eines vierten Zwischenwertes t(i) aus dem dritten Zwischenwert x'(i) gemäß der Formel:

$$t'(2k) = x'(2k)$$

und

$$t'(2k+1) = -x'(2k+1)$$

- Berechnen (26) eines fünften Zwischenwertes y'(i) abgeleitet von dem vierten Zwischenwert t'(i) gemäß der Formel:

$$y'(i) = t'(i) \cdot t'^*(i+1)$$

- Berechnen (27) von sechsten und siebten Zwischenwerten Z und Z' gemäß den Formeln:

$$Z(2k) = y(2k) + y'(2k)$$

$$Z'(2k+1) = y(2k+1) + y'(2k+1)$$

- Berechnen jeweils eines achten und neunten Wertes S und S' gemäß den folgenden Formeln:

$$S = 1/N \sum Z(k) \quad \text{für } k = 1 \text{ bis } N$$

$$S' = 1/N \sum Z'(k) \text{ für } k = 1 \text{ bis } N$$

- Ausführen eines Tests (29), um zu bestimmen, ob der absolute Wert des Realteils von S' höherwertig als der absolute Wert des Imaginärteils von S' ist, und in diesem Fall, Berechnen (30) eines zehnten Zwischenwertes R wie folgt:

$$R = S' + S$$

und umgekehrt, wenn der absolute Wert des Realteils von S' niederwertiger als der absolute Wert des Imaginärteils von S' ist, Berechnen (31) von R gemäß der Formel:

$$R = S' - S$$

dann Berechnen (32) der Offset-Schätzung gemäß der Formel:

$$\Delta f = \frac{1}{2\pi T} \arctan\left(\frac{\Im m(R)}{\Re e(R)}\right)$$

wobei $\left|\Delta f\right| \le \frac{1}{2T}$, $e(R)$ und $T = \frac{1}{15} 10^{-3}$ $m(R)$ und die realen und imaginären Anteile jeweils des zehnten Zwischenwertes R sind.

6. Empfänger für ein UMTS-Kommunikationssystem umfassend Mittel zum Empfangen des Signals, das von zwei Antennen übertragen wird, und umfassend zwei gemeinsame Pilotsignal-Kanäle (Common Pilot Channels) CPICH, wobei der Empfänger Mittel zum Trennen der zwei Signale aufweist basierend auf der Berechnung von:

$$r_{NoTxd}[k] = r[k] + r[k+2] = (1+j)\left(S_1[k] + (-1)^{\left|\frac{k+1}{2}\right|} D_2[k]\right) + N_s[k]$$

$$r_{Txd}[k] = (-1)^{\left|\frac{k+1}{2}\right|}(r[k] - r[k+2]) = (1+j)\left(S_2[k] + (-1)^{\left|\frac{k+1}{2}\right|} D_1[k]\right) + (-1)^{\left|\frac{k+1}{2}\right|} N_d[k]$$

wobei

r[k] dem empfangenen Signal zum Zeitpunkt k entspricht;
$r_{NoTxd}$ und $r_{Txd}$ den Ergebnissen der Vorverarbeitung entsprechen; wobei für m = 1, 2 gilt:

$$S_m[k] = h_m \exp(j\varphi_0)(\exp(jk\Phi) + \exp(j(k+2)\Phi))$$

$$D_m[2k] = h_m \exp(j\varphi_0)(\exp(jk\Phi) - \exp(j(k+2)\Phi))$$

$$N_s[k] = n[k] + n[k+2]$$

$$N_d[k] = n[k] - n[k+2]$$

wobei n[k] den Rauschanteilen in dem empfangenen Signal zum Zeitpunkt k entsprechen,
$h_m$ der Kanalantwort für Antenne m (m = 1, 2) entspricht,
j dem imaginären Komplex wie etwa $j^2$ = -1 und $\phi = 2\pi\Delta T$ entspricht,

und ferner aufweist Mittel zum Berechnen einer Schätzung des Frequenz-Offset des empfangenen Signals unter Verwendung des Ergebnisses der Vorverarbeitungs-Schritts.

7. Empfänger nach Anspruch 6, **dadurch gekennzeichnet, dass** er ferner Mittel zur Schätzung des Frequenz-Offset aufweist basierend auf einer Schätzgröße R $_{even, avr}$, die gemäß der folgenden Formeln berechnet ist:

$$R_{even, avr} = \frac{1}{N_2 - N_1} \sum_{k=N_1, k \, even}^{N_2} R_{even}[k]$$

mit

$$R_{even}[k] = R_{r_{Txd}r_{Txd}}[k] + R_{r_{NoTxd}r_{NoTxd}}[k] = 4\exp(j\Phi)(|h_1|^2 + |h_1|^2)\cos(2\Phi) + R_{N_sN_s}[k] - R_{N_dN_d}[k]$$

wobei

$$R_{r_{NoTxd}r_{NoTxd}}[k] = r_{NoTxd}[k] * conj(r_{NoTxd}[k+1])$$

$$= 2\left(R_{S_1S_1} + (-1)^{\left\lfloor\frac{k+1}{2}\right\rfloor}(-1)^{\left\lfloor\frac{k+2}{2}\right\rfloor}R_{D_2D_2} + (-1)^{\left\lfloor\frac{k+2}{2}\right\rfloor}R_{S_1D_2} + (-1)^{\left\lfloor\frac{k+1}{2}\right\rfloor}R_{D_2S_1}\right) + R_{N_sN_s}[k]$$

$$R_{r_{Txd}r_{Txd}}[k] = r_{Txd}[k] * conj(r_{Txd}[k+1])$$

$$= 2\left(R_{S_2S_2} + (-1)^{\left\lfloor\frac{k+1}{2}\right\rfloor}(-1)^{\left\lfloor\frac{k+2}{2}\right\rfloor}R_{D_1D_1} + (-1)^{\left\lfloor\frac{k+2}{2}\right\rfloor}R_{S_2D_1} + (-1)^{\left\lfloor\frac{k+1}{2}\right\rfloor}R_{D_1S_2}\right) + (-1)^{\left\lfloor\frac{k+1}{2}\right\rfloor}(-1)^{\left\lfloor\frac{k+2}{2}\right\rfloor}R_{N_dN_d}[k]$$

wobei für m = 1, 2 und n = 1, 2 gilt:

$$R_{S_mS_m} = S_m[k].conj(S_m[k+1]) = 2|h_m|^2(\exp(j\Phi)(1 + \cos(2\Phi)))$$

$$R_{D_mD_m} = D_m[k].conj(D_m[k+1]) = 2|h_m|^2(\exp(j\Phi)(1 - \cos(2\Phi)))$$

$$R_{S_nD_n} = S_m[k].conj(D_n[k+1]) = -2jh_mh_n^*\exp(j\Phi)\sin(2\Phi)$$

$$R_{N_sN_s} = N_s[k].conj(N_s[k+1])$$

$$R_{N_dN_d} = N_d[k].conj(N_d[k+1])$$

und die Frequenz-Offset-Schätzung durch die Formel bereitgestellt wird:

$$\Delta f = \frac{1}{2\pi T} \arctan\left(\frac{\Im m(R)}{\Re e(R)}\right)$$

8. Empfänger nach Anspruch 6, **dadurch gekennzeichnet, dass** er ferner Mittel zur Schätzung des Frequenz-Offset aufweist basierend auf einer Schätzgröße R $_{odd,\,avr}$, die gemäß der folgenden Formeln berechnet ist:

$$R_{odd,\,avr} = \frac{1}{N_2 - N_1} \sum_{k=N_1,\,k\,odd}^{N_2} R_{odd}[k]$$

mit

$$R_{odd}[k] = R_{r_{Txd}r_{Txd}}[k] + R_{r_{NoTxd}r_{NoTxd}}[k] = 4\exp(j\Phi)\left(|h_1|^2 + |h_2|^2\right) + \left(R_{N_sN_s}[k] + R_{N_dN_d}[k]\right)$$

wobei

$$R_{r_{NoTxd}r_{NoTxd}}[k] = r_{NoTxd}[k]^* conj(r_{NoTxd}[k+1])$$

$$= 2\left(R_{S_1S_1} + (-1)^{\left\lfloor\frac{k+1}{2}\right\rfloor}(-1)^{\left\lfloor\frac{k+2}{2}\right\rfloor}R_{D_2D_1} + (-1)^{\left\lfloor\frac{k+2}{2}\right\rfloor}R_{S_1D_2} + (-1)^{\left\lfloor\frac{k+1}{2}\right\rfloor}R_{D_2S_1}\right) + R_{N_sN_s}[k]$$

$$R_{r_{Txd}r_{Txd}}[k] = r_{Txd}[k]^* conj(r_{Txd}[k+1])$$

$$= 2\left(R_{S_1S_1} + (-1)^{\left\lfloor\frac{k+1}{2}\right\rfloor}(-1)^{\left\lfloor\frac{k+2}{2}\right\rfloor}R_{D_1D_1} + (-1)^{\left\lfloor\frac{k+2}{2}\right\rfloor}R_{S_2D_1} + (-1)^{\left\lfloor\frac{k+1}{2}\right\rfloor}R_{D_1S_1}\right) + (-1)^{\left\lfloor\frac{k+1}{2}\right\rfloor}(-1)^{\left\lfloor\frac{k+2}{2}\right\rfloor}R_{N_dN_d}[k]$$

wobei für m = 1, 2 und n = 1, 2 gilt:

$$R_{S_mS_m} = S_m[k].conj(S_m[k+1]) = 2|h_m|^2\left(\exp(j\Phi)(1+\cos(2\Phi))\right)$$

$$R_{D_mD_m} = D_m[k].conj(D_m[k+1]) = 2|h_m|^2\left(\exp(j\Phi)(1-\cos(2\Phi))\right)$$

$$R_{S_mD_n} = S_m[k].conj(D_n[k+1]) = -2jh_mh_n^*\exp(j\Phi)\sin(2\Phi)$$

$$R_{N_sN_s} = N_s[k].conj(N_s[k+1])$$

$$R_{N_dN_d} = N_d[k].conj(N_d[k+1])$$

und die Frequenz-Offset-Schätzung durch die Formel bereitgestellt wird:

$$\Delta f = \frac{1}{2\pi T} \arctan\left(\frac{\Im m(R)}{\Re e(R)}\right)$$

**9.** Empfänger nach Anspruch 7 oder 8, **dadurch gekennzeichnet, dass** er ferner Mittel zur Schätzung des Frequenz-Offset aufweist basierend auf beiden Größen R $_{odd,\ avr}$ und R $_{even,\ avr}$, die gemäß der Formel berechnet sind:

$$\text{If } \left|\Re e\left(R_{odd,\ avr}\right)\right| > \left|\Im m\left(R_{odd,\ avr}\right)\right|$$

$$R = R_{odd,\ avr} + R_{even,\ avr}$$

else

$$R = R_{odd,\ avr} - R_{even,\ avr}$$

und die Frequenz-Offset-Schätzung durch die Formel bereitgestellt wird:

$$\Delta f = \frac{1}{2\pi T} \arctan\left(\frac{\Im m(R)}{\Re e(R)}\right)$$

**10.** Empfänger für ein UMTS-Kommunikationsnetz umfassend Mittel zum Empfangen des Signals, das von zwei Antennen übertragen wird, und umfassend zwei gemeinsame Pilotsignal-Kanäle (Common Pilot Channels) CPICH, wobei der Empfänger aufweist:

- Mittel zum Extrahieren (21) des empfangenen CPICH Signals enthaltend in dem CPICH-Kanal;
- Mittel zum Ausführen eines ersten Verarbeitungszweigs (links) umfassend die Schritte:

- Mittel zum Berechnen (22) eines ersten Zwischenwertes x (i) gemäß der Formel:

$$x(i) = r(i) + r(i+2)$$

- Mittel zum Berechnen (23) eines zweiten Zwischenwertes y (i) aus dem ersten Zwischenwert x (i) gemäß der Formel:

$$y(i) = x(i) \cdot x^*(i+1)$$

- Mittel zum Ausführen eines zweiten Verarbeitungszweigs (rechts) die folgenden Schritte umfasst:

- Mittel zum Berechnen (24) eines dritten Zwischenwertes x'(i) gemäß der Formel:

$$x'(i) = r(i) + r(i+2)$$

- Mittel zum Berechnen (25) eines vierten Zwischenwertes t (i) aus dem dritten Zwischenwert x'(i) gemäß der Formel:

$$t'(2k) = x'(2k)$$

und

$$t'(2k+1) = -x'(2k+1)$$

- Mittel zum Berechnen (26) eines fünften Zwischenwertes y'(i) abgeleitet von dem vierten Zwischenwert t'(i) gemäß der Formel:

$$y'(i) = t'^*(i+1)$$

- Mittel zum Berechnen (27) von sechsten und siebten Zwischenwerten Z und Z' gemäß den Formeln:

$$Z(2k) = y(2k) + y'(2k)$$

$$Z'(2k+1) = y(2k+1) + y'(2k+1)$$

- Mittel zum Berechnen jeweils eines achten und neunten Wertes S und S' gemäß den folgenden Formeln:

$$S = 1/N \sum Z(k) \quad \text{für } k = 1 \text{ bis } N$$

$$S' = 1/N \sum Z'(k) \quad \text{für } k = 1 \text{ bis } N$$

- Mittel zum Ausführen eines Tests (29), um zu bestimmen, ob der absolute Wert des Realteils von S' höherwertig als der absolute Wert des Imaginärteils von S' ist, und in diesem Fall, Berechnen (30) eines zehnten Zwischenwertes R wie folgt:

$$R = S' + S$$

und umgekehrt, wenn der absolute Wert des Realteils von S' niederwertiger als der absolute Wert des Imaginärteils von S' ist, Mittel zum Berechnen (31) von R gemäß der Formel:

$$R = S' - S$$

Mittel zum Berechnen (32) der Offset-Schätzung gemäß der Formel:

$$\Delta f = \frac{1}{2\pi T} \arctan\left(\frac{\Im m(R)}{\Re e(R)}\right)$$

wobei $|\Delta f| \leq \dfrac{1}{2T}$, $\Re e(R)$ und $T = \dfrac{1}{15} 10^{-3}$ $\Im m(R)$ und die realen und imaginären Anteile jeweils des zehnten Zwischenwertes R sind.

11. Mobiltelefon für ein UMTS-Kommunikationsnetz umfassend den Empfänger wie in Anspruch 6 bis 10 definiert.

12. Mobiltelefon nach Anspruch 11, **dadurch gekennzeichnet, dass** es in einem tragbaren Dokumenten-Assistenten (Portable Document Assistant) PDA ausgebildet ist.

## Revendications

1. Procédé de calcul d'un estimé du décalage de fréquence dans un récepteur pour un réseau de communication UMTS, ledit récepteur recevant le signal transmis par deux antennes et comportant deux canaux pilotes communs CPICH, ledit procédé comportant un pré-traitement basé sur la séparation des deux signaux via le calcul de

$$r_{NoTxd}[k] = r[k] + r[k+2] = (1+j)\left(S_1[k] + (-1)^{\left\lfloor\frac{k+1}{2}\right\rfloor}D_2[k]\right) + N_s[k]$$

$$r_{Txd}[k] = (-1)^{\left\lfloor\frac{k+1}{2}\right\rfloor}(r[k] - r[k+2]) = (1+j)\left(S_2[k] + (-1)^{\left\lfloor\frac{k+1}{2}\right\rfloor}D_1[k]\right) + (-1)^{\left\lfloor\frac{k+1}{2}\right\rfloor}N_d[k]$$

où

r[k] est le signal reçu à l'instant k;

r $_{NoTxd}$ et r $_{Txd}$ sont le résultat dudit prétraitement;

pour *m* = 1,2

$$S_m[k] = h_m \exp(j\varphi_0)(\exp(jk\Phi) + \exp(j(k+2)\Phi))$$

$$D_m[2k] = h_m \exp(j\varphi_0)(\exp(jk\Phi) - \exp(j(k+2)\Phi))$$

$$N_s[k] = n[k] + n[k+2]$$

$$N_d[k] = n[k] - n[k+2]$$

*n[k] correspondant aux composantes de bruit au sein du signal reçu à l'instant k*
*$h_m$ correspondant la réponse de canal pour l'antenne m (m=1, 2),*
*j correspondant au complexe imaginaire tel que $j^2 = -1$ et $\Phi = 2\pi\Delta f\, T$*

ledit pré-traitement étant ensuite suivi d'une estimation du décalage de fréquence du signal reçu en utilisant le résultat de ladite étape de pré-traitement.

2. Procédé selon la revendication 1 **caractérisé en ce que** l'estimé de décalage de fréquence est base sur un estimateur $R_{even,\,avr}$ calculé suivant les formules suivantes :

$$R_{even,\,avr} = \frac{1}{N_2 - N_1} \sum_{k=N_1, k\,even}^{N_2} R_{even}[k]$$

avec

$$R_{even}[k] = R_{r_{Txd}r_{Txd}}[k] + R_{r_{NoTxd}r_{NoTxd}}[k] = 4\exp(j\Phi)(|h_1|^2 + |h_2|^2)\cos(2\Phi) + R_{N_sN_s}[k] - R_{N_dN_d}[k]$$

dans laquelle

$$R_{r_{No\,Txd}r_{No\,Txd}}[k] = r_{No\,Txd}[k]*conj(r_{No\,Txd}[k+1])$$

$$= 2\left(R_{S_1S_1} + (-1)^{\lfloor\frac{k+1}{2}\rfloor}(-1)^{\lfloor\frac{k+2}{2}\rfloor}R_{D_2D_2} + (-1)^{\lfloor\frac{k+2}{2}\rfloor}R_{S_1D_2} + (-1)^{\lfloor\frac{k+1}{2}\rfloor}R_{D_2S_1}\right) + R_{N_1N_1}[k]$$

$$R_{r_{Txd}r_{Txd}}[k] = r_{Txd}[k]*conj(r_{Txd}[k+1])$$

$$= 2\left(R_{S_2S_2} + (-1)^{\lfloor\frac{k+1}{2}\rfloor}(-1)^{\lfloor\frac{k+2}{2}\rfloor}R_{D_1D_1} + (-1)^{\lfloor\frac{k+2}{2}\rfloor}R_{S_2D_1} + (-1)^{\lfloor\frac{k+1}{2}\rfloor}R_{D_1S_2}\right) + (-1)^{\lfloor\frac{k+1}{2}\rfloor}(-1)^{\lfloor\frac{k+2}{2}\rfloor}R_{N_dN_d}[k]$$

dans laquelle, pour $m = 1,2$ et $n = 1,2$

$$R_{S_mS_m} = S_m[k].conj(S_m[k+1]) = 2|h_m|^2\left(\exp(j\Phi)(1+\cos(2\Phi))\right)$$

$$R_{D_mD_m} = D_m[k].conj(D_m[k+1]) = 2|h_m|^2\left(\exp(j\Phi)(1-\cos(2\Phi))\right)$$

$$R_{S_mD_n} = S_m[k].conj(D_n[k+1]) = -2jh_mh_n^*\exp(j\Phi)\sin(2\Phi)$$

$$R_{N_sN_s} = N_s[k].conj(N_s[k+1])$$

$$R_{N_dN_d} = N_d[k].conj(N_d[k+1])$$

l'estimé de décalage de fréquence étant donné par la formule:

$$\Delta f = \frac{1}{2\pi T}\arctan\left(\frac{\Im m(R)}{\Re e(R)}\right)$$

**3.** Procédé selon la revendication 1 **caractérisé en ce que** l'estimé de décalage de fréquence est base sur un estimateur $R_{odd,\,avr}$ calculé suivant les formules suivantes:

$$R_{odd,\,avr} = \frac{1}{N_2 - N_1}\sum_{k=N_1,\,k\,odd}^{N_2}R_{odd}[k]$$

avec

$$R_{odd}[k] = R_{r_{Txd}r_{Txd}}[k] - R_{r_{No\,Txd}r_{No\,Txd}}[k] = 4\exp(j\Phi)(|h_1|^2 + |h_2|^2) + (R_{N_sN_s}[k] + R_{N_dN_d}[k])$$

dans laquelle :

$$R_{r_{No\,Txd}r_{No\,Txd}}[k] = r_{No\,Txd}[k]*conj(r_{No\,Txd}[k+1])$$

$$= 2\left(R_{S_1S_1} + (-1)^{\lfloor\frac{k+1}{2}\rfloor}(-1)^{\lfloor\frac{k+2}{2}\rfloor}R_{D_2D_2} + (-1)^{\lfloor\frac{k+2}{2}\rfloor}R_{S_1D_2} + (-1)^{\lfloor\frac{k+1}{2}\rfloor}R_{D_2S_1}\right) + R_{N_1N_1}[k]$$

$$R_{r_{Txd}r_{Txd}}[k] = r_{Txd}[k]* conj(r_{Txd}[k+1])$$

$$= 2\left(R_{S_2S_2} + (-1)^{\left\lfloor\frac{k+1}{2}\right\rfloor}(-1)^{\left\lfloor\frac{k+2}{2}\right\rfloor}R_{D_1D_1} + (-1)^{\left\lfloor\frac{k+2}{2}\right\rfloor}R_{S_2D_1} + (-1)^{\left\lfloor\frac{k+2}{2}\right\rfloor}R_{D_1S_2}\right) + (-1)^{\left\lfloor\frac{k+1}{2}\right\rfloor}(-1)^{\left\lfloor\frac{k+2}{2}\right\rfloor}R_{N_dN_d}[k]$$

où, pour *m* = 1,2 et *n* = 1,2

$$R_{S_mS_m} = S_m[k].conj(S_m[k+1]) = 2|h_m|^2\left(\exp(j\Phi)(1+\cos(2\Phi))\right)$$

$$R_{D_mD_m} = D_m[k].conj(D_m[k+1]) = 2|h_m|^2\left(\exp(j\Phi)(1-\cos(2\Phi))\right)$$

$$R_{S_mD_n} = S_m[k].conj(D_n[k+1]) = -2jh_mh_n^*\exp(j\Phi)\sin(2\Phi)$$

$$R_{N_sN_s} = N_s[k].conj(N_s[k+1])$$

$$R_{N_dN_d} = N_d[k].conj(N_d[k+1])$$

l'estimé du décalage de fréquence étant donné par la formule:

$$\Delta f = \frac{1}{2\pi T}\arctan\left(\frac{\Im m(R)}{\Re e(R)}\right)$$

**4.** Procédé selon la revendication 2 et 3 **caractérisé en ce que** l'estimation de décalage de fréquence est calculé sur le base de $R_{odd,avr}$ et $R_{even,\,avr}$ suivant les formules:

$$\text{If } \left|\Re e(R_{odd,\,avr})\right| > \left|\Im m(R_{odd,\,avr})\right|$$
$$R = R_{odd,\,avr} + R_{even,\,avr}$$
$$\text{else}$$
$$R = R_{odd,\,avr} - R_{even,\,avr}$$

et l'estimé de décalage de fréquence est donnée par la formule:

$$\Delta f = \frac{1}{2\pi T}\arctan\left(\frac{\Im m(R)}{\Re e(R)}\right)$$

**5.** Procédé de calcul d'un estimé du décalage de fréquence dans un récepteur pour un réseau de communication UMTS, ledit récepteur recevant le signal transmis par deux antennes et comportant deux canaux pilotes communs (CPICH), ledit procédé comportant les étapes:

    - extraction (21) du signal CPICH reçu incorporé dans le canal CPICH;
    - la mise en oeuvre d'une première branche (gauche) comprenant les étapes:

        - calcul (22) d'une première valeur intermédiaire x(i) suivant la formule:

$$x(i) = r(i) + r(i+2)$$

- calcul (23) d'une seconde valeur intermédiaire y(i) dérivée de la première valeur intermédiaire x(i) suivant la formule:

$$y(i) = x(i) \cdot x^*(i+1)$$

- la mise en oeuvre d'une seconde branche (droite) comprenant les étapes:

- calcul (24) d'une troisième valeur intermédiaire x'(i) suivant la formule:

$$x'(i) = r(i) - r(i+2)$$

- calcul (25) d'une quatrième valeur intermédiaire t(i) dérivée de la troisième valeur intermédiaire x'(i) suivant la formule :

$$t'(2k) = x'(2k)$$

et

$$t'(2k+1) = -x'(2k+1)$$

- calcul (26) d'une cinquième valeur intermédiaire y'(i) dérivée de la quatrième valeur intermédiaire t'(i) suivant la formule:

$$y'(i) = t'(i) \cdot t'^*(i+1)$$

- calcul (27) d'une sixième et septième valeur intermédiaires Z et Z' suivant les formulas:

$$Z(2k) = y(2k) + y'(2k)$$

$$Z'(2k+1) = y(2k+1) + y'(2k+1)$$

- calcul respectivement d'une huitième et d'une neuvième valeurs intermédiaires S et S' suivant la formule:

$$S = 1/N \sum Z(k) \quad \text{pour } k = 1 \text{ à } N$$

$$S' = 1/N \sum Z'(k) \quad \text{pour } k = 1 \text{ à } N$$

- la mise en oeuvre d'un test (29) pour déterminer si la valeur absolue de la partie réelle de S' est supérieure à la valeur absolue de la partie imaginaire de S' et, dans ce cas, le cacul (30) d'une dixième valeur intermédiaire R comme suit :

$$R = S' + S$$

et, inversement, si la valeur absolue de la partie réelle de S' est inférieure à la valeur absolue de la partie imaginaire de S', le calcul (31) de R suivant la formule :

$$R = S' - S$$

puis le calcul (32) de l'estimé de décalage suivant la formule:

$$\Delta f = \frac{1}{2\pi T}\arctan\left(\frac{\Im m(R)}{\Re e(R)}\right)$$

où $\left|\Delta f\right| \le \frac{1}{2T}$, $e(R)$ et $T = \frac{1}{15}10^{-3}$ $m(R)$ sont les parties réelles et imaginaires , respectivement, de la dixième valeur intermédiaire.

6. Récepteur pour un système de communication UMTS comprenant des moyens de receptions de signaux transmis par deux antennes et comprenant deux canaux pilots communs CPICH, ledit récepteur comprenant des moyens pour séparer les deux signaux sur la base du calcul de :

$$r_{NoTxd}[k] = r[k] + r[k+2] = (1+j)\left(S_1[k] + (-1)^{\left\lfloor\frac{k+1}{2}\right\rfloor}D_2[k]\right) + N_s[k]$$

$$r_{Txd}[k] = (-1)^{\left\lfloor\frac{k+1}{2}\right\rfloor}(r[k] - r[k+2]) = (1+j)\left(S_2[k] + (-1)^{\left\lfloor\frac{k+1}{2}\right\rfloor}D_1[k]\right) + (-1)^{\left\lfloor\frac{k+1}{2}\right\rfloor}N_d[k]$$

où

r[k] est le signal reçu à l'instant k;

$r_{NoTxd}$ et $r_{Txd}$ sont le résultat du pré traitement;

où pour *m = 1,2*

$$S_m[k] = h_m \exp(j\varphi_0)(\exp(jk\Phi) + \exp(j(k+2)\Phi))$$

$$D_m[2k] = h_m \exp(j\varphi_0)(\exp(jk\Phi) - \exp(j(k+2)\Phi))$$

$$N_s[k] = n[k] + n[k+2]$$

$$N_d[k] = n[k] - n[k+2]$$

*n[k] correspondant aux composantes de bruit dans le signal reçu à l'instant k* $h_m$ correspondant à la réponse du canal pour l'antenne m (*m=1, 2*),
j correspondant au complexe imaginaire tel que *$j^2$ = -1* et $\Phi$ = 2 $\pi$ *$\Delta f$ T*

et comportant en outre des moyens de calcul d'un estimé du décalage de fréquence en utilisant le résultat de l'étape de pré-traitement.

7. Récepteur selon la revendication 6 **caractérisé en ce qu'**il comporte en outré des moyens pour estimer le décalage de fréquence base sur un estimateur $R_{even, avr}$ calculé suivant les formules :

$$R_{even,avr} = \frac{1}{N_2 - N_1} \sum_{k=N_1, k\,even}^{N_2} R_{even}[k]$$

avec

$$R_{even}[k] = R_{r_{Txd}r_{Txd}}[k] + R_{r_{NoTxd}r_{NoTxd}}[k] = 4\exp(j\Phi)\left(|h_1|^2 + |h_2|^2\right)\cos(2\Phi) + R_{N_sN_s}[k] - R_{N_dN_d}[k]$$

dans laquelle :

$$R_{r_{NoTxd}r_{NoTxd}}[k] = r_{NoTxd}[k]^* conj\left(r_{NoTxd}[k+1]\right)$$

$$= 2\left(R_{S_1S_1} + (-1)^{\left\lfloor\frac{k+1}{2}\right\rfloor}(-1)^{\left\lfloor\frac{k+2}{2}\right\rfloor}R_{D_1D_1} + (-1)^{\left\lfloor\frac{k+2}{2}\right\rfloor}R_{S_1D_1} + (-1)^{\left\lfloor\frac{k+1}{2}\right\rfloor}R_{D_1S_1}\right) + R_{N_sN_s}[k]$$

$$R_{r_{Txd}r_{Txd}}[k] = r_{Txd}[k]^* conj\left(r_{Txd}[k+1]\right)$$

$$= 2\left(R_{S_2S_2} + (-1)^{\left\lfloor\frac{k+1}{2}\right\rfloor}(-1)^{\left\lfloor\frac{k+2}{2}\right\rfloor}R_{D_2D_2} + (-1)^{\left\lfloor\frac{k+2}{2}\right\rfloor}R_{S_2D_2} + (-1)^{\left\lfloor\frac{k+1}{2}\right\rfloor}R_{D_2S_2}\right) + (-1)^{\left\lfloor\frac{k+1}{2}\right\rfloor}(-1)^{\left\lfloor\frac{k+2}{2}\right\rfloor}R_{N_dN_d}[k]$$

où, pour $m = 1,2$ et $n = 1,2$

$$R_{S_mS_m} = S_m[k].conj\left(S_m[k+1]\right) = 2|h_m|^2\left(\exp(j\Phi)(1+\cos(2\Phi))\right)$$

$$R_{D_nD_m} = D_m[k].conj\left(D_m[k+1]\right) = 2|h_m|^2\left(\exp(j\Phi)(1-\cos(2\Phi))\right)$$

$$R_{S_mD_n} = S_m[k].conj\left(D_n[k+1]\right) = -2jh_m h_n^* \exp(j\Phi)\sin(2\Phi)$$

$$R_{N_sN_s} = N_s[k].conj\left(N_s[k+1]\right)$$

$$R_{N_dN_d} = N_d[k].conj\left(N_d[k+1]\right)$$

l'estimé de décalage de fréquence étant donné par la formule:

$$\Delta f = \frac{1}{2\pi T}\arctan\left(\frac{\Im m(R)}{\Re e(R)}\right)$$

8. Récepteur selon la revendication 6 **caractérisé en ce qu'**il comporte en outré des moyens d'estimer le décalage de fréquence sur la base d'un estimateur $R_{odd,\,avr}$ calculé suivant les formules suivantes :

$$R_{odd,\,avr} = \frac{1}{N_2 - N_1}\sum_{k=N_1, k\,odd}^{N_2} R_{odd}[k]$$

avec

$$R_{odd}[k] = R_{r_{Txd}r_{Txd}}[k] + R_{r_{NoTxd}r_{NoTxd}}[k] = 4\exp(j\Phi)\left(|h_1|^2 + |h_2|^2\right) + \left(R_{N_sN_s}[k] + R_{N_dN_d}[k]\right)$$

dans laquelle

$$R_{r_{NoTxd}r_{NoTxd}}[k] = r_{NoTxd}[k] * conj(r_{NoTxd}[k+1])$$

$$= 2\left(R_{S_1S_1} + (-1)^{\left\lfloor\frac{k+1}{2}\right\rfloor}(-1)^{\left\lfloor\frac{k+2}{2}\right\rfloor}R_{D_2D_2} + (-1)^{\left\lfloor\frac{k+2}{2}\right\rfloor}R_{S_1D_2} + (-1)^{\left\lfloor\frac{k+1}{2}\right\rfloor}R_{D_2S_1}\right) + R_{N_sN_s}[k]$$

$$R_{r_{Txd}r_{Txd}}[k] = r_{Txd}[k] * conj(r_{Txd}[k+1])$$

$$= 2\left(R_{S_2S_2} + (-1)^{\left\lfloor\frac{k+1}{2}\right\rfloor}(-1)^{\left\lfloor\frac{k+2}{2}\right\rfloor}R_{D_1D_1} + (-1)^{\left\lfloor\frac{k+2}{2}\right\rfloor}R_{S_2D_1} + (-1)^{\left\lfloor\frac{k+1}{2}\right\rfloor}R_{D_1S_2}\right) + (-1)^{\left\lfloor\frac{k+1}{2}\right\rfloor}(-1)^{\left\lfloor\frac{k+2}{2}\right\rfloor}R_{N_dN_d}[k]$$

où, pour $m = 1,2$ et $n = 1,2$

$$R_{S_mS_m} = S_m[k].conj(S_m[k+1]) = 2|h_m|^2\left(\exp(j\Phi)(1+\cos(2\Phi))\right)$$

$$R_{D_mD_m} = D_m[k].conj(D_m[k+1]) = 2|h_m|^2\left(\exp(j\Phi)(1-\cos(2\Phi))\right)$$

$$R_{S_mD_n} = S_m[k].conj(D_n[k+1]) = -2jh_mh_n^*\exp(j\Phi)\sin(2\Phi)$$

$$R_{N_sN_s} = N_s[k].conj(N_s[k+1])$$

$$R_{N_dN_d} = N_d[k].conj(N_d[k+1])$$

l'estimé de décalage de fréquence étant donné par la formule:

$$\Delta f = \frac{1}{2\pi T}\arctan\left(\frac{\Im m(R)}{\Re e(R)}\right)$$

9. Récepteur selon la revendication 7 ou 8 **caractérisé en ce qu'**il comporte en outré des moyens pour l'estimation du décalage de fréquence base sur $R_{odd, avr}$ and $R_{even, avr}$ suivant la formule :

$$\text{If } \left|\Re e(R_{odd, avr})\right| > \left|\Im m(R_{odd, avr})\right|$$
$$R = R_{odd, avr} + R_{even, avr}$$
$$\text{else}$$
$$R = R_{odd, avr} - R_{even, avr}$$

et l'estimation du décalage de fréquence étant donnée par la formule:

$$\Delta f = \frac{1}{2\pi T}\arctan\left(\frac{\Im m(R)}{\Re e(R)}\right)$$

10. Récepteur pour un réseau de communication UMTS comprenant des moyens de reception du signal transmis par deux antennas et cmoportant deux canaux pilotes communs CPICH, ledit récepteur comprenant:

- des moyens d'extraction (21) du signal CPICH inclu dans le canal CPICH;
- des moyens pour mettre en oeuvre une première branche (gauche) de traitement comprenant les étapes :

    - des moyens de calcul (22) d'une première valeur intermédiaire x(i) suivant la formule :

$$x(i) = r(i) + r(i+2)$$

    - des moyens de calcul (23) d'une seconde valeur intermédiaire y(i) dérivée de la première valeur intermédiaire x(i) suivant la formule :

$$y(i) = x(i) \cdot x^*(i+1)$$

- des moyens pour mettre en oeuvre une seconde branche (droite) de traitement comprenant :

    - des moyens de calcul (24) d'une troisième valeur intermédiaire x'(i) suivant la formule:

$$x'(i) = r(i) - r(i+2)$$

    - des moyens de calcul (25) d'une quatrième valeur intermédiaire t(i) dérivée de la troisième valeur intermédiaire x'(i) suivant la formule :

$$t'(2k) = x'(2k)$$

et

$$t'(2k+1) = - x'(2k+1)$$

    - des moyens de calcul (26) d'une cinquième valeur intermédiaire y'(i) dérivée de la quatrième valeur intermédiaire t'(i) suivant la formule :

$$y'(i) = t'(i) \cdot t'^*(i+1)$$

- des moyens de calcul (27) d'une sixième et d'une septième valeurs intermédiaires Z et Z' suivant les formules :

$$Z(2k) = y(2k) + y'(2k)$$

$$Z'(2k+1) = y(2k+1) + y'(2k+1)$$

- des moyens de calcul respectivement d'une huitième et d'une neuvième valeurs S et S' suivant la formule :

$$S = \sum Z(k) \quad \text{pour } k = 1 \text{ à } N$$

$$S' = \sum Z'(k) \quad \text{pour } k = 1 \text{ à } N$$

- des moyens d'exécution d'un test (29) pour déterminer si la valeur absolue de la partie réelle de S' est supérieure à la valeur absolue de la partie imaginaire de S' et, dans ce cas, pour calculer (30) une dixième valeur intermédiaire R comme suit :

$$R = S' + S$$

et, inversement, si la valeur absolue de la partie réelle de S' est inférieure à la valeur absolue de la partie imaginaire de S', des moyens de calcul (31) de R suivant la formule :

$$R = S' - S$$

des moyens de calcul (32) de l'estimation du décalage suivant la formule :

$$\Delta f = \frac{1}{2\pi T} \arctan\left(\frac{\Im m(R)}{\Re e(R)}\right)$$

dans laquelle $|\Delta f| \leq \frac{1}{2T}$, $e(R)$ et $T = \frac{1}{15}10^{-3}$ $m(R)$ sont les parties réelles et imaginaires, respectivement de la dixième valeur intermédiaire R.

11. Un téléphone mobile pour un réseau de communication UMTS comportant un récepteur tel que défini dans l'une des revendications 6 à 10.

12. Un téléphone mobile suivant la revendication 11 **caractérisé en ce qu'**il constitue un assistant personnel PDA.

FIG.1

Extract the received CPICH signal 21

x(i) = r (i) + r(i+2) 22

y(i) = x (i) . x*(i+1) 23

x'(i) = r (i) - r(i+2) 24

t'(2k) = x' (2k)
t(2k+1) = - x'(2k+1) 25

y'(i) = t' (i) . t'*(i+1) 26

Z(2k) = y (2k) + y'( 2k)
Z'(2k+1) = y (2k+1) + y'( 2k+1) 27

$S = \sum z(k)$

$S' = \sum z'(k)$ 28

no ← If $|Re(S')| > |Im(S')|$ ? → yes 29

R = S' - S 31

R = S' + S 30

$$\Delta f (f) = \frac{1}{2\pi T} \arctan\left(\frac{\Im m(R)}{\Re e(R)}\right)$$ 32

# FIG.2

FIG.3

FIG.4

FIG. 5

# FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

• EP 1249980 A

### Non-patent literature cited in the description

• Robust frequency offset estimation for pilot symbol assisted packet CDMA with MIMO antenna systems. **DAE-KI HONG et al.** IEEE COMMUNICATIONS LETTERS. IEEE SERVICE CENTER, 01 June 2002, vol. 6, 262-264

• **KYUNGCHUN LEE et al.** Carrier frequency recovery in MIMO and OFDM systems using orthogonal training sequences. *2004 IEEE 60TH VEHICULAR TECHNOLOGY CONFERENCE. VTC2004-FALL,* 26 September 2004, vol. 2, ISBN 978-0-7803-8521-4, 1518-1522

• **SEOK HO WON et al.** Channel estimation methods adequate to space time transmit diversity receiver in the W-CDMA IMT-2000 system. *IEEE 54TH VEHICULAR TECHNOLOGY CONFERENCE. VTC FALL 2001,* 07 October 2001, vol. 1, ISBN 978-0-7803-7005-0, 456-459